# EUROPEAN PATENT APPLICATION

(11) **EP 3 855 553 A1**
(43) Date of publication of application: **28.07.2021**
(21) Application number: 19889364.6
(22) Date of filing: 07.11.2019
(51) Int. Cl.: H01M 10/48, H01M 2/10

(54) **BATTERY PACK**

(30) Priority: 30.11.2018 JP 2018225408
(71) Applicant: Makita Corporation, Anjo-shi Aichi 446-8502 (JP)
(72) Inventor: NAKATANI Kohei, Anjo-shi, Aichi 446-8502 (JP); TANAKA Kazuya, Anjo-shi, Aichi 446-8502 (JP); UESUGI Hiroki, Anjo-shi, Aichi 446-8502 (JP)
(74) Representative: Kramer Barske Schmidtchen Patentanwälte PartG mbB
(86) International application number: PCT/JP2019/043746
(87) International publication number: WO 2020/110655

(57) **Abstract**

The battery pack disclosed herein may include a plurality of battery cells including first and second battery cells; a first thermistor disposed closest to the first battery cell among the battery cells; a second thermistor disposed closest to the second battery cell among the battery cells; and a case accommodating the battery cells, the first thermistor, and the second thermistor. The first battery cell may be disposed at a position where another battery cell is interposed between the first battery cell and a wall surface of the case with respect to a direction orthogonal to a longitudinal direction of the first battery cell. The second battery cell may be disposed at a position where no other battery cell is interposed between the second battery cell and the wall surface of the case with respect to a direction orthogonal to a longitudinal direction of the second battery cell.

## Description

### Technical Field

The technique disclosed herein relates to a battery pack.

### Background Art

Japanese Patent Application Publication No. 2005-287091 describes a battery pack. The battery pack includes a plurality of battery cells including a first battery cell and a second battery cell, a first thermistor, a second thermistor, and a case accommodating the plurality of battery cells, the first thermistor, and the second thermistor. Each of the first thermistor and the second thermistor can obtain the temperature of a battery cell having a high temperature because they are disposed to be surrounded all around by the battery cells.

### Summary of Invention

### Technical Problem

In a battery pack including a plurality of battery cells, it is desirable to obtain not only the temperature of a battery cell having a high temperature but also the temperature of a battery cell having a low temperature. In the battery pack of Japanese Patent Application Publication No. 2005-287091, the first thermistor and the second thermistor are both disposed to be surrounded by the plurality of battery cells. Therefore, if the second thermistor attempts to obtain the temperature of a battery cell having a low temperature, for example, a temperature detected by the second thermistor may be higher than the actual temperature of the low-temperature battery cell since the second thermistor is disposed to be surrounded by battery cells of which temperature is higher than that of the low-temperature battery cell. The disclosure herein provides a technique that enables the temperature of a battery cell having a low temperature as well as the temperature of a battery cell having a high temperature to be obtained in a battery pack comprising a plurality of battery cells.

### Solution to Technical Problem

A battery pack is disclosed herein. The battery pack may comprise: a plurality of battery cells including a first battery cell and a second battery cell; a first thermistor disposed closest to the first battery cell among the plurality of battery cells; a second thermistor disposed closest to the second battery cell among the plurality of battery cells; and a case accommodating the plurality of battery cells, the first thermistor, and the second thermistor. The first battery cell may be disposed at a position where another battery cell is interposed between the first battery cell and a wall surface of the case with respect to a direction orthogonal to a longitudinal direction of the first battery cell. The second battery cell may be disposed at a position where no other battery cell is interposed between the second battery cell and the wall surface of the case with respect to a direction orthogonal to a longitudinal direction of the second battery cell. In the disclosure herein, "another battery cell is interposed between a battery cell and the wall surface of the case" means that the entirety of the battery cell is unable to be projected on the wall surface of the case without interfering with the other battery cell, while "no other battery cell is interposed between a battery cell and the wall surface of the case" means that the entirety of the battery cell is able to be projected on the wall surface of the case without interfering with another battery cell.

Another battery pack is also disclosed herein. This battery pack may comprise a plurality of battery cells including a first battery cell and a second battery cell; a first thermistor disposed closest to the first battery cell among the plurality of battery cells; a second thermistor disposed closest to the second battery cell among the plurality of battery cells; and a case accommodating the plurality of battery cells, the first thermistor, and the second thermistor. The plurality of battery cells may include: an upper battery cell group disposed in an upper row; a lower battery cell group disposed in a lower row; and a middle battery cell group disposed between the upper battery cell group and the lower battery cell group. The first battery cell may be included in the middle battery cell group. The second battery cell may be included in either the upper battery cell group or the lower battery cell group.

Yet another battery pack is also disclosed herein. This battery pack may comprise: a plurality of battery cells including a first battery cell and a second battery cell; a first thermistor disposed closest to the first battery cell among the plurality of battery cells; a second thermistor disposed closest to the second battery cell among the plurality of battery cells; and a case accommodating the plurality of battery cells, the first thermistor and the second thermistor. The plurality of battery cells may include: an upper battery cell group disposed at a position facing an upper surface of the case; a lower battery cell group disposed at a position facing a lower surface of the case; and a middle battery cell group disposed between the upper battery cell group and the lower battery cell group. The first battery cell may be included in the middle battery cell group. The second battery cell may be included in either the upper battery cell group or the lower battery cell group.

### Brief Description of Drawings

FIG. 1 schematically shows a configuration of a power supply system 600 according to an embodiment.
FIG. 2 is a perspective view of a battery pack 2 according to an embodiment, as seen from upper front left side.
FIG. 3 is a perspective view of the battery pack 2 according to the embodiment, as seen from upper rear left side.
FIG. 4 is a perspective view of the battery pack 2 according to the embodiment, as seen from lower front right side.
FIG. 5 is a perspective view of a battery module 10 of the battery pack 2 according to the embodiment, as seen from upper front left side.
FIG. 6 is a perspective view of the battery module 10 of the battery pack 2 according to the embodiment, as seen from upper rear left side.
FIG. 7 is a perspective view of the battery module 10 of the battery pack 2 according to the embodiment, as seen from lower front right side.
FIG. 8 is a perspective view of a plurality of battery cells 40 and a cell holder 42 of the battery pack 2 according to the embodiment, as seen from upper rear left side.
FIG. 9 is a perspective view of a power terminal 60 of the battery pack 2 according to the embodiment, as seen from upper front left side.
FIG. 10 is a left-side view of the power terminal 60 of the battery pack 2 according to the embodiment.
FIG. 11 is a rear view of the power terminal 60 of the battery pack 2 according to the embodiment.
FIG. 12 is a perspective view of a signal terminal 62 of the battery pack 2 according to the embodiment, as seen from upper front left side.
FIG. 13 is a rear view of the signal terminal 62 of the battery pack 2 according to the embodiment.
FIG. 14 is a perspective view of a lower case 16 of the battery pack 2 according to the embodiment, as seen from upper front left side.
FIG. 15 is a perspective view of the lower case 16 with the battery module 10 of the battery pack 2 according to the embodiment attached thereto, as seen from upper rear left side.
FIG. 16 is a perspective view of a front part of the lower case 16 with the battery module 10 of the battery pack 2 according to the embodiment attached thereto, as seen from upper front left side.
FIG. 17 is a perspective view of a rear part of the lower case 16 with the battery module 10 of the battery pack 2 according to the embodiment attached thereto, as seen from upper rear left side.
FIG. 18 is a perspective view showing how the battery pack 2 according to the embodiment is attached to and detached from an electrical machine 200, as seen from lower front right side.
FIG. 19 is a perspective view of a battery pack mount 202 of the electrical machine 200 according to the embodiment, as seen from lower front right side.
FIG. 20 is a front view of the battery pack mount 202 of the electrical machine 200 according to the embodiment.
FIG. 21 is a bottom view of the battery pack mount 202 of the electrical machine 200 according to the embodiment.
FIG. 22 is a perspective view showing how the battery pack 2 according to the embodiment is attached to and detached from a charger 400, as seen from lower front right side.
FIG. 23 is a perspective view of a battery pack mount 404 of the charger 400 according to the embodiment, as seen from lower front right side.
FIG. 24 is a cross-sectional view of the battery pack 2 and the charger 400 according to the embodiment in a state where they are attached to each other, as seen from left side.
FIG. 25 is a plan view of the battery pack 2 according to the embodiment, as seen from above.
FIG. 26 is a plan view of a control substrate 44 and a display substrate 46 of the battery pack 2 according to the embodiment, as seen from above.
FIG. 27 is a plan view of the plurality of battery cells 40 and the cell holder 42 of the battery pack 2 according to the embodiment, as seen from above.
FIG. 28 is a cross-sectional view of the battery pack 2 according to the embodiment, as seen from right side.
FIG. 29 is a flowchart of charging-start determination process executed by the control substrate 44 of the battery pack 2 according to the embodiment.
FIG. 30 is a graph showing an example of correspondence relationship between battery cell temperature and charging-start voltage threshold, which is stored in the control substrate 44 of the battery pack 2 according to the embodiment.
FIG. 31 is a flowchart of charging parameter creation process executed by the control substrate 44 of the battery pack 2 according to the embodiment.
FIG. 32 is a flowchart of charging abnormality determination process executed by the control substrate 44 of the battery pack 2 according to the embodiment.
FIG. 33 is a graph showing an example of correspondence relationship between battery cell temperature and allowable charging voltage, which is stored in the control substrate 44 of the battery pack 2 according to the embodiment.
FIG. 34 is a graph showing an example of correspondence relationship between battery cell temperature and allowable charging current, which is stored in the control substrate 44 of the battery pack 2 according to the embodiment.
FIG. 35 is a graph showing an example of correspondence relationship between battery cell temperature and charging-current-reduction start voltage, which is stored in the control substrate 44 of the battery pack 2 according to the embodiment.
FIG. 36 is a graph showing an example of correspondence relationship between battery cell temperature and cut-off current, which is stored in the control substrate 44 of the battery pack 2 according to the embodiment.
FIG. 37 is a graph showing an example of correspondence relationship between battery cell temperature and abnormal voltage threshold, which is stored in the control substrate 44 of the battery pack 2 according to the embodiment.
FIG. 38 is a flowchart of blow control process executed by a control substrate 408 of the charger 400 according to the embodiment.
FIG. 39 is a flowchart of discharge-abnormality determination process executed by the control substrate 44 of the battery pack 2 according to the embodiment.
FIG. 40 is a plan view of the battery pack 2 according to a variant, as seen from above.
FIG. 41 is a plan view of the battery pack 2 according to another variant, as seen from above.
FIG. 42 is a plan view of the control substrate 44 and the display substrate 46 of the battery pack 2 according to another variant, as seen from above.
FIG. 43 is a cross-sectional view of the battery pack 2 according to yet another variant, as seen from right side.
FIG. 44 is a cross-sectional view of the battery pack 2 according to still another variant, as seen from right side.
FIG. 45 is a perspective view of a battery pack 2 according to still another variant, as seen from upper front left side.
FIG. 46 is a cross-sectional view of the battery pack 2 show in FIG. 45, as seen from right side.

### Description of Embodiments

Representative, non-limiting examples of the present disclosure will now be described in further detail with reference to the attached drawings. This detailed description is merely intended to teach a person of skill in the art further details for practicing aspects of the present teachings and is not intended to limit the scope of the present disclosure. Furthermore, each of the additional features and teachings disclosed below may be utilized separately or in conjunction with other features and teachings to provide improved battery packs, as well as methods for using and manufacturing the same.

Moreover, combinations of features and steps disclosed in the following detailed description may not be necessary to practice the present disclosure in the broadest sense, and are instead taught merely to particularly describe representative examples of the present disclosure. Furthermore, various features of the above-described and below-described representative examples, as well as the various independent and dependent claims, may be combined in ways that are not specifically and explicitly enumerated in order to provide additional useful embodiments of the present teachings.

All features disclosed in the description and/or the claims are intended to be disclosed separately and independently from each other for the purpose of original written disclosure, as well as for the purpose of restricting the claimed subject matter, independent of the compositions of the features in the embodiments and/or the claims. In addition, all value ranges or indications of groups of entities are intended to disclose every possible intermediate value or intermediate entity for the purpose of original written disclosure, as well as for the purpose of restricting the claimed subject matter.

In one or more embodiments, a battery pack may comprise: a plurality of battery cells including a first battery cell and a second battery cell; a first thermistor disposed closest to the first battery cell among the plurality of battery cells; a second thermistor disposed closest to the second battery cell among the plurality of battery cells; and a case accommodating the plurality of battery cells, the first thermistor, and the second thermistor. The first battery cell may be disposed at a position where another battery cell is interposed between the first battery cell and a wall surface of the case with respect to a direction orthogonal to a longitudinal direction of the first battery cell. The second battery cell may be disposed at a position where no other battery cell is interposed between the second battery cell and the wall surface of the case with respect to a direction orthogonal to a longitudinal direction of the second battery cell.

Generally, in a battery pack in which a case accommodates a plurality of battery cells therein, heat is released from an outer surface of the case to air outside of the case. Since another battery cell is interposed between the first battery cell and the wall surface of the case in the above-described configuration, the heat is less likely to be released via the wall surface of the case, and thus the first battery cell is likely to have a high temperature. Since no other battery cell is interposed between the second battery cell and the wall surface of the case, the heat is likely to be released via the wall surface of the case, and thus the second battery cell is likely to have a low temperature. The above-described configuration enables the first thermistor to obtain the temperature of the first battery cell which is likely to have a high temperature and enables the second thermistor to obtain the temperature of the second battery cell which is likely to have a low temperature. The above-described configuration enables the temperature of a battery cell having a high temperature as well as the temperature of a battery cell having a low temperature to be obtained in the battery pack comprising the plurality of battery cells.

In one or more embodiments, the case may include an air supply hole through which air is introduced and an air discharge hole through which air is discharged.

The above-described configuration enables the temperature of a battery cell having a low temperature as well as the temperature of a battery cell having a high temperature to be obtained in the battery pack in which the plurality of battery packs is cooled by the air flowing inside the case from the air supply hole to the air discharge hole.

In one or more embodiments, the second thermistor may be disposed at a position where a distance from the position to the air supply hole is smaller than a distance from the position to the air discharge hole.

In the battery pack in which the plurality of battery cells is cooled by the air flowing inside the case from the air supply hole to the air discharge hole, the air has a lowest temperature immediately after flowing into the air supply hole and has a highest temperature immediately before flowing out from the air discharge hole. Therefore, a battery cell disposed close to the air supply hole is likely to have a low temperature, while a battery cell disposed close to the air discharge hole is likely to have a high temperature. The above-described configuration enables the second thermistor to obtain the temperature of a battery cell having a lower temperature.

In one or more embodiments, the first thermistor may be disposed at a position where a distance from the position to the air discharge hole is smaller than a distance from the position to the air supply hole.

In the battery pack in which the plurality of battery cells is cooled by the air flowing inside the case from the air supply hole to the air discharge hole, a battery cell disposed close to the air supply hole is likely to have a low temperature, while a battery cell disposed close to the air discharge hole is likely to have a high temperature. The above-described configuration enables the first thermistor to obtain the temperature of a battery cell having a higher temperature.

In one or more embodiments, the battery pack may further comprise a substrate accommodated in the case and disposed between the air discharge hole and the plurality of battery cells. Each of the first thermistor and the second thermistor may be connected to the substrate. The first thermistor may include a film type thermistor. The second thermistor may include a dip type thermistor.

Generally, film type thermistors have high accuracy for temperature detection, but are difficult to extend to a position far from a substrate. To the contrary, dip type thermistors have low accuracy for temperature detection, but are easy to extend to a position far from a substrate. Since the substrate is disposed between the air discharge hole and the plurality of battery cells in the above-described configuration, the first thermistor including a film type thermistor obtains the temperature of a battery cell disposed close to the air discharge hole, that is, the temperature of a battery cell which is likely to have a high temperature. Therefore, the temperature of the high-temperature battery cell can be obtained with high accuracy. Further, in the above-described configuration, even with the substrate disposed between the air discharge hole and the plurality of battery cells, the second thermistor including a dip type thermistor can obtain the temperature of a battery cell disposed close to the air supply hole, that is, the temperature of a battery cell which is likely to have a low temperature.

In one or more embodiments, a battery pack may comprise: a plurality of battery cells including a first battery cell and a second battery cell; a first thermistor disposed closest to the first battery cell among the plurality of battery cells; a second thermistor disposed closest to the second battery cell among the plurality of battery cells; and a case accommodating the plurality of battery cells, the first thermistor, and the second thermistor. The plurality of battery cells may include: an upper battery cell group disposed in an upper row; a lower battery cell group disposed in a lower row; and a middle battery cell group disposed between the upper battery cell group and the lower battery cell group. The first battery cell may be included in the middle battery cell group. The second battery cell may be included in either the upper battery cell group or the lower battery cell group.

Since other battery cells are interposed between the first battery cell and upper and lower surfaces of the case in the above-described configuration, the heat is less likely to be released via the upper and lower surfaces of the case, and thus the first battery cell is likely to have a high temperature. Further, since no other battery cell is interposed between the second battery cell and the upper or lower surface of the case, the heat is likely to be released via the upper or lower surface of the case, and thus the second battery cell is likely to have a low temperature. The above-described configuration enables the first thermistor to obtain the temperature of the first battery cell having a high temperature and also enables the second thermistor to obtain the temperature of the second battery cell having a low temperature. The above-described configuration enables the temperature of a battery cell having a high temperature as well as the temperature of a battery cell having a low temperature to be obtained in the battery pack comprising the plurality of battery cells.

In one or more embodiments, a battery pack may comprise: a plurality of battery cells including a first battery cell and a second battery cell; a first thermistor disposed closest to the first battery cell among the plurality of battery cells; a second thermistor disposed closest to the second battery cell among the plurality of battery cells; and a case accommodating the plurality of battery cells, the first thermistor and the second thermistor. The plurality of battery cells may include: an upper battery cell group disposed at a position facing an upper surface of the case; a lower battery cell group disposed at a position facing a lower surface of the case; and a middle battery cell group disposed between the upper battery cell group and the lower battery cell group. The first battery cell may be included in the middle battery cell group. The second battery cell may be included in either the upper battery cell group or the lower battery cell group.

Since other battery cells are interposed between the first battery cell and upper and lower surfaces of the case in the above-described configuration, the heat is less likely to be released via the upper and lower surfaces of the case, and thus the first battery cell is likely to have a high temperature. Further, no other battery cell is interposed between the second battery cell and the upper or lower surface of the case, the heat is likely to be released via the upper or lower surface of the case, and thus the second battery cell is likely to have a low temperature. The above-described configuration enables the first thermistor to obtain the temperature of the first battery cell having a high temperature and also enables the second thermistor to obtain the temperature of the second battery cell having a low temperature. The above-described configuration enables the temperature of a battery cell having a high temperature as well as the temperature of a battery cell having a low temperature to be obtained in the battery pack comprising the plurality of battery cells.

### Embodiments

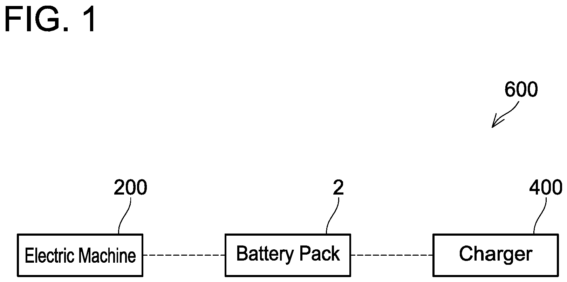

A power supply system 600 shown in FIG. 1 comprises a battery pack 2, an electrical machine 200, and a charger 400. The battery pack 2 is configured to be detachably attached to the electrical machine 200. The electrical machine 200 may be an electric power tool such as an electric drill, an electric grinder, electric circular saw, an electric chain saw, an electric reciprocating saw or the like; may be an electric working machine such as an electric mower, an electric trimmer, an electric blower or the like; or may be other electrical machines such as a light, a radio or the like. When attached to the electrical machine 200, the battery pack 2 supplies power to the electrical machine 200. The battery pack 2 is also configured to be detachably attached to the charger 400. When attached to the charger 400, the battery pack 2 is supplied with power from the charger 400.

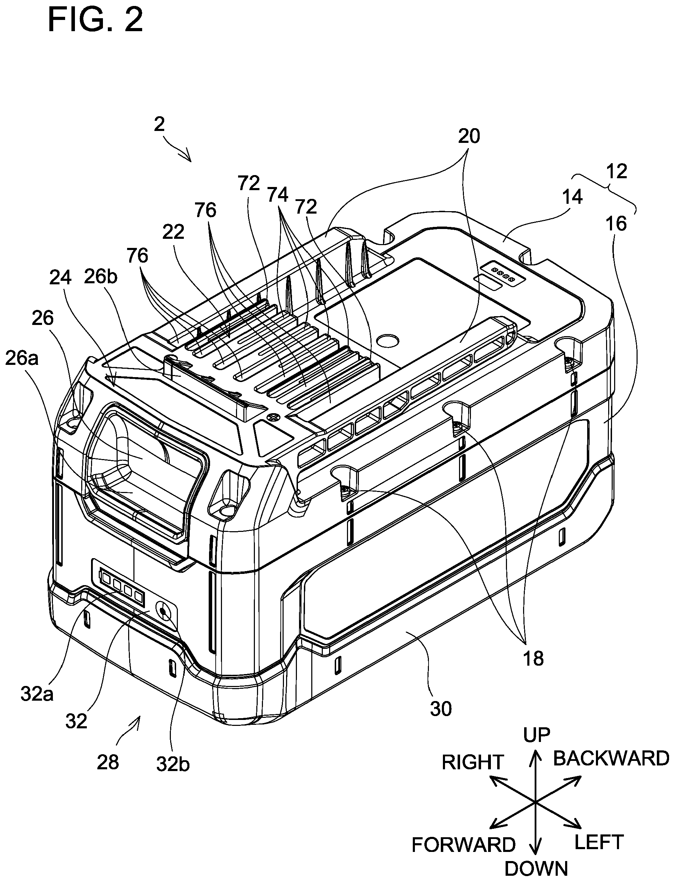

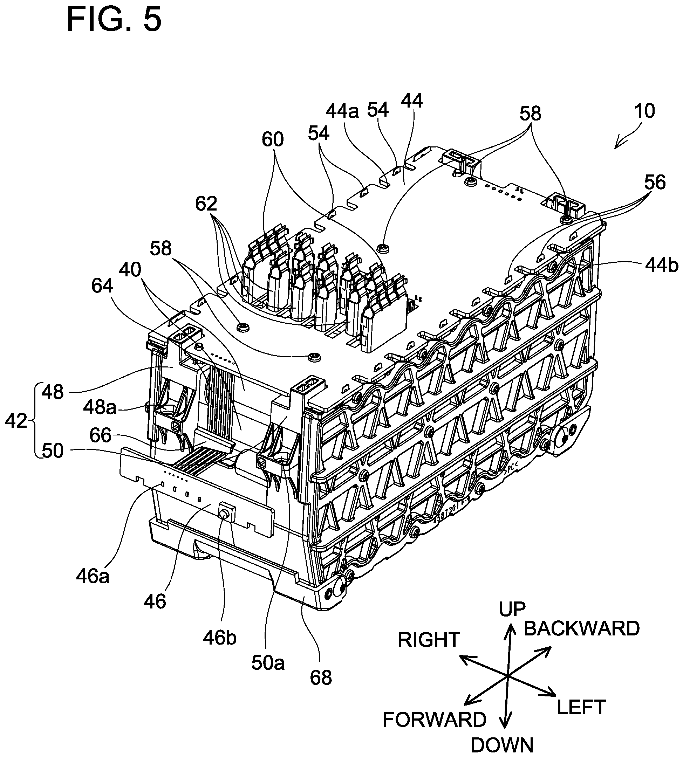

As shown in FIGS. 2 to 4, the battery pack 2 includes a battery module 10 (see FIGS. 5 to 7) and a case 12 accommodating the battery module 10 therein. Hereinbelow, in a state where the battery pack 2 is attached to the electrical machine 200 or the charger 400, a direction in which the electrical machine 200 or the charger 400 is located as seen from the battery pack 2 will be referred to as upward, and the opposite direction will be referred to as downward. Further, a direction in which the battery pack 2 is slid when attached to the electrical machine 200 or the charger 400 will be referred to as rearward, and a direction in which the battery pack 2 is slid when detached from the electrical machine 200 or the charger 400 will be referred to as frontward. That is, hereinbelow, a front-rear direction corresponds to a sliding direction in which the battery pack 2 is slid with respect to the electrical machine 200 or the charger 400.

A nominal voltage of the battery pack 2 is 64 V, for example. A nominal capacity of the battery pack 2 is 5 Ah, for example. A dimension of the battery pack 2 in the front-rear direction is approximately 220 mm, for example. A dimension of the battery pack 2 in an up-down direction is approximately 130 mm, for example. A dimension of the battery pack 2 in a right-left direction is approximately 110 mm, for example. A weight of the battery pack 2 is approximately 2 kg, for example. The nominal voltage, dimensions, and weight of the battery pack 2 vary depending on the number of battery cells 40 (to be described later) and the like, and the aforementioned numerical values are merely examples.

An overall shape of the case 12 is substantially cuboid, and the case 12 is divided into an upper case 14 and a lower case 16. The upper case 14 and the lower case 16 are each constituted of an insulating material such as resin. The upper case 14 and the lower case 16 are fixed to each other by metal screws 18.

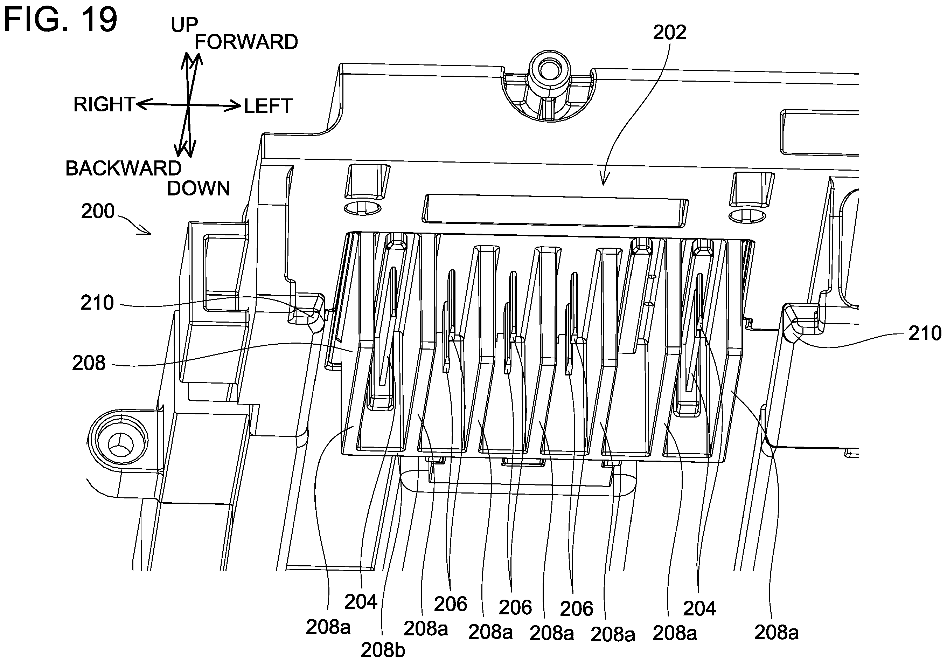

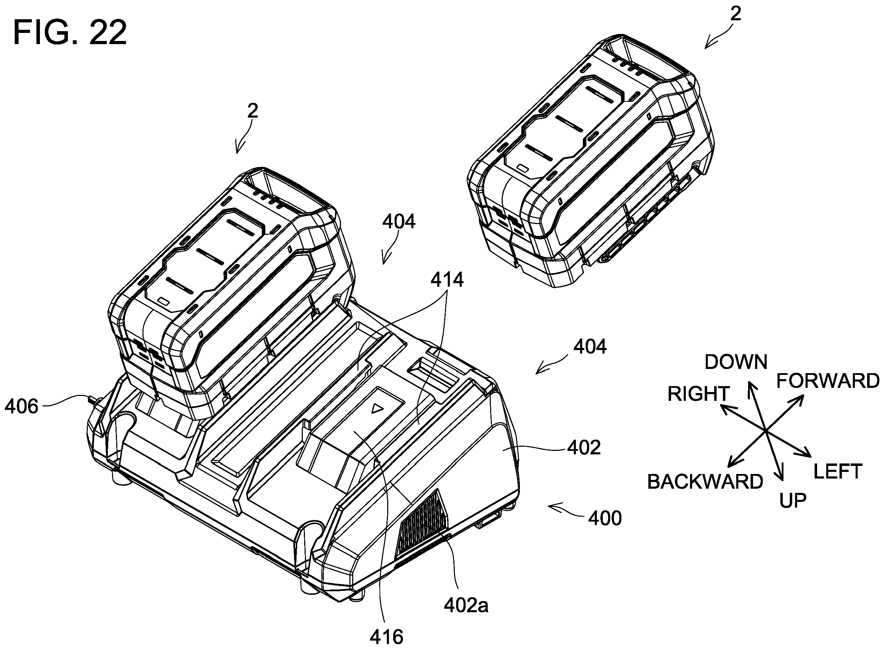

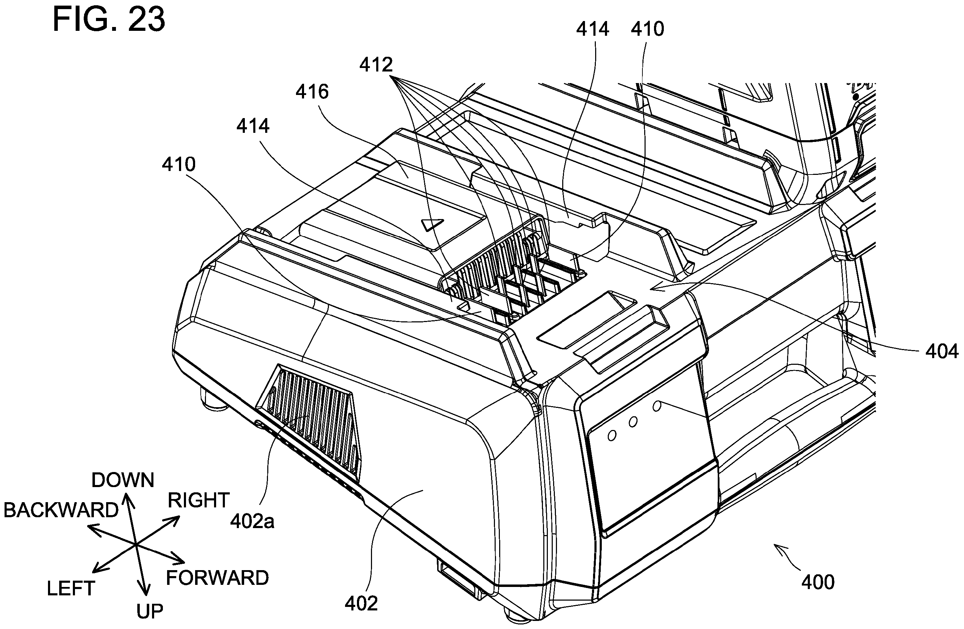

As shown in FIG. 2, the upper case 14 is provided with slide rails 20, a terminal receiver 22, and a hook mount 24. The slide rails 20 extend along the front-rear direction and are respectively disposed at right and left ends of an upper portion of the upper case 14. The slide rails 20 are configured to slidably engage with slide rails 210 (see FIG. 19) of the electrical machine 200 or slide rails 414 (see FIG. 23) of the charger 400 when the battery pack 2 is attached to and detached from the electrical machine 200 or the charger 400. The terminal receiver 22 is disposed between the left and right slide rails 20 and is configured to receive power terminals 204 and signal terminals 206 (see FIG. 19) of the electrical machine 200 or power terminals 410 and signal terminals 412 (see FIG. 23) of the charger 400 when the battery pack 2 is attached to the electrical machine 200 or the charger 400. The hook mount 24 is disposed at an upper front portion of the upper case 14. The hook mount 24 is provided with a hook 26. The hook 26 is a resin member and includes a manipulation portion 26a and an engaging portion 26b. The hook 26 is held by the upper case 14 and is configured movable in the up-down direction. The hook 26 is biased upward by a compression spring (not shown) and is configured to move downward when the manipulation portion 26a and/or the engaging portion 26b are pressed downward. The engaging portion 26b is configured to engage with a housing (not shown) of the electrical machine 200 or a housing 402 (see FIG. 22) of the charger 400 when the battery pack 2 is attached to the electrical machine 200 or the charger 400 to fix the battery pack 2 to the electrical machine 200 or the charger 400. To detach the battery pack 2 from the electrical machine 200 or the charger 400, a user presses the manipulation portion 26a downward, which moves the engaging portion 26b downward. Sliding the battery pack 2 in this state enables the battery pack 2 to be detached from the electrical machine 200 or the charger 400. The manipulation portion 26a has a shape that is concaved downward from a front side toward a rear side. Therefore, when the user presses the manipulation portion 26a downward with his/her finger placed on the manipulation portion 26a, the user can press the manipulation portion 26a downward without the finger slipping therefrom.

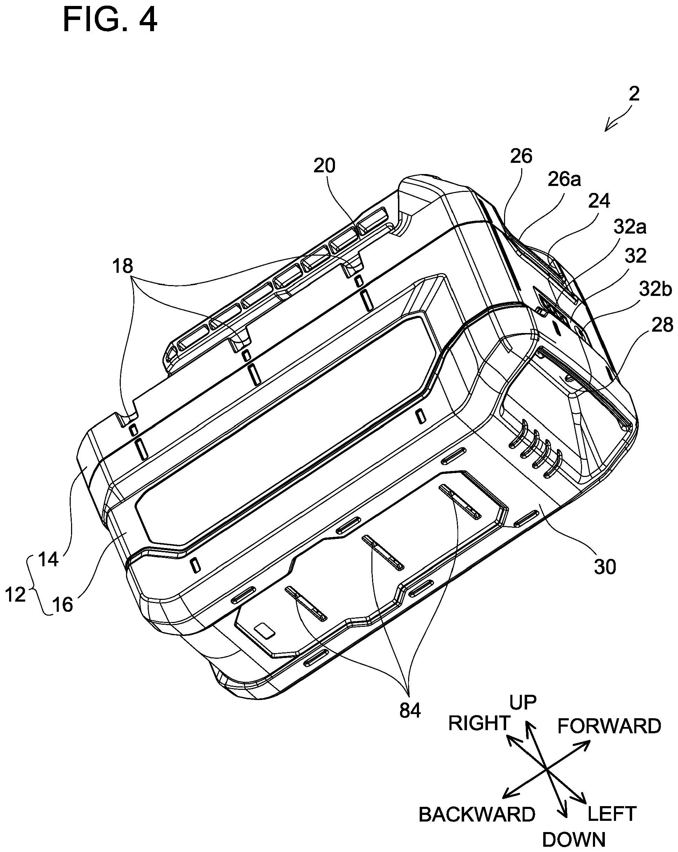

As shown in FIG. 4, the lower case 16 is provided with a gripping recess 28. The gripping recess 28 is disposed at a lower front portion of the lower case 16. The gripping recess 28 opens downward. The user can lift and carry the battery pack 2 with his/her index, middle, ring and little fingers placed in the gripping recess 28. Further, the user can detach the battery pack 2 from the electrical machine 200 or the charger 400 with one hand by pressing down the manipulation portion 26a with the thumb while placing the index, middle, ring and little fingers in the gripping recess 28. A lower portion of the lower case 16 is provided with a protective layer 30. The protective layer 30 is elastomer, for example. The protective layer 30 covers vicinities of corners of a lower surface of the lower case 16. Therefore, if the battery pack 2 is dropped, damage to the corners of the lower case 16 can be mitigated. The protective layer 30 also covers an inside of the gripping recess 28. Therefore, when the user lifts the battery pack 2 with the fingers placed in the gripping recess 28, burden on the user's fingers can be dispersed.

As shown in FIG. 2, a front surface of the lower case 16 is provided with a display portion 32. The display portion 32 includes an indicator 32a that is configured to show the user a remaining amount of charge in the battery pack 2 and a button 32b that is configured to switch display of the indicator 32a between on and off. On an outer surface of the case 12, the display portion 32 is disposed between the manipulation portion 26a of the hook 26 and the gripping recess 28. Therefore, when the user attaches or detaches the battery pack 2 to or from the electrical machine 200 or the charger 400 with the fingers placed on the manipulation portion 26a and in the gripping recess 28, the user can easily check the remaining amount of charge in the battery pack 2 via the display portion 32.

As shown in FIGS. 5 to 7, the battery module 10 includes the plurality of battery cells 40, the cell holder 42 holding the plurality of battery cells 40, a control substrate 44 fixed to the cell holder 42, and a display substrate 46 connected to the control substrate 44.

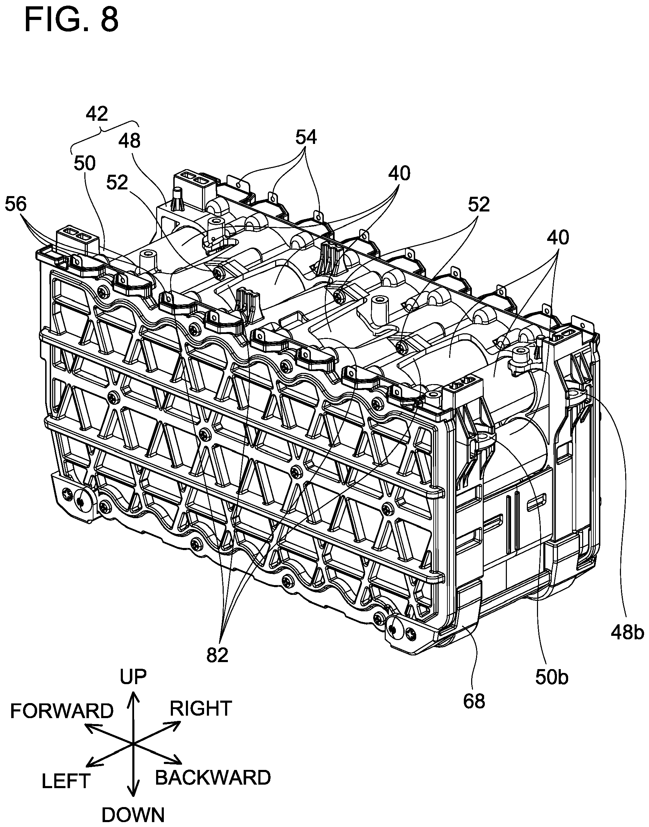

Each of the battery cells 40 is a secondary battery cell, such as a lithium ion battery cell, that has a substantially cylindrical shape, includes a positive electrode at one end thereof, and includes a negative electrode at another end thereof. As shown in FIG. 8, the battery cells 40 are arranged such that their longitudinal direction is along the right-left direction. The battery cells 40 are arranged side by side in the up-down direction and in the front-rear direction. In the present embodiment, the battery cells 40 are arranged in four rows in the up-down direction with eight battery cells in each row in the front-rear direction. A nominal voltage of each battery cell 40 is 4 V, for example. A nominal capacity of each battery cell 40 is 2.5 Ah, for example. The cell holder 42 is a resin member and is divided into a right cell holder 48 and a left cell holder 50. The right cell holder 48 holds vicinities of right ends of the battery cells 40. The left cell holder 50 holds vicinities of left ends of the battery cells 40. The right cell holder 48 and the left cell holder 50 are fixed to each other by metal screws 52. The right cell holder 48 includes a plurality of lead plates 54 that is in contact with the electrodes (the positive or negative electrodes) disposed at the right ends of the battery cells 40. The left cell holder 50 includes a plurality of lead plates 56 that is in contact with the electrodes (the positive or negative electrodes) disposed at the left ends of the battery cells 40. As shown in FIG. 5, each of the lead plates 54, 56 is connected to the control substrate 44 which is disposed on top of the cell holder 42.

The control substrate 44 is fixed to the cell holder 42 by metal screws 58 in a state of being placed on an upper portion of the cell holder 42. The control substrate 44 includes a pair of power terminals 60 that is used for discharge or charge, and a plurality of signal terminals 62 that is used to send and receive signals, when the battery pack 2 is attached to the electrical machine 200 or the charger 400. The pair of power terminals 60 is disposed such that the power terminals 60 are positioned on right and left sides of the plurality of signal terminals 62 respectively to interpose the signal terminals 62 therebetween.

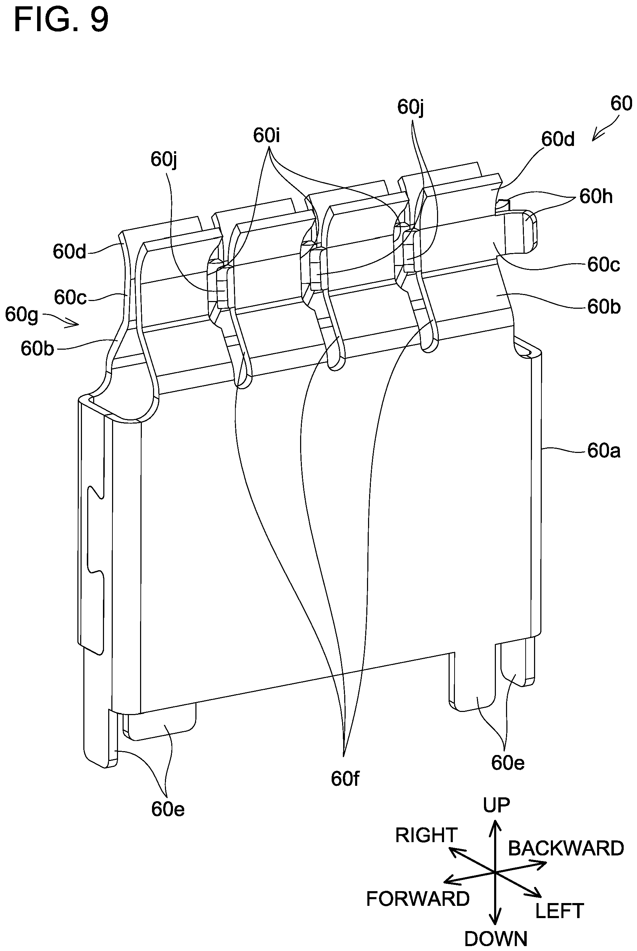

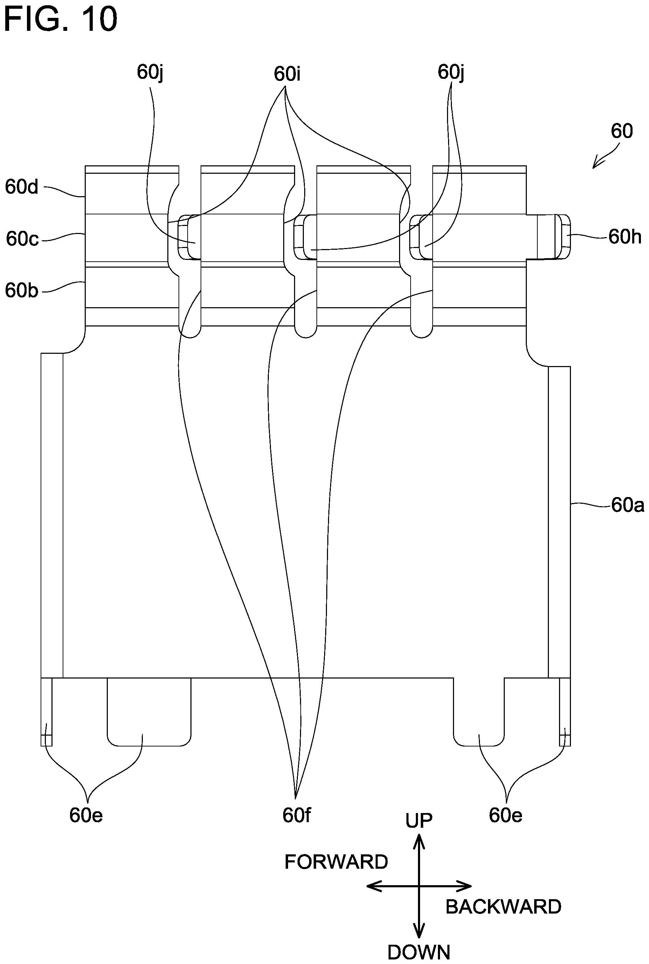

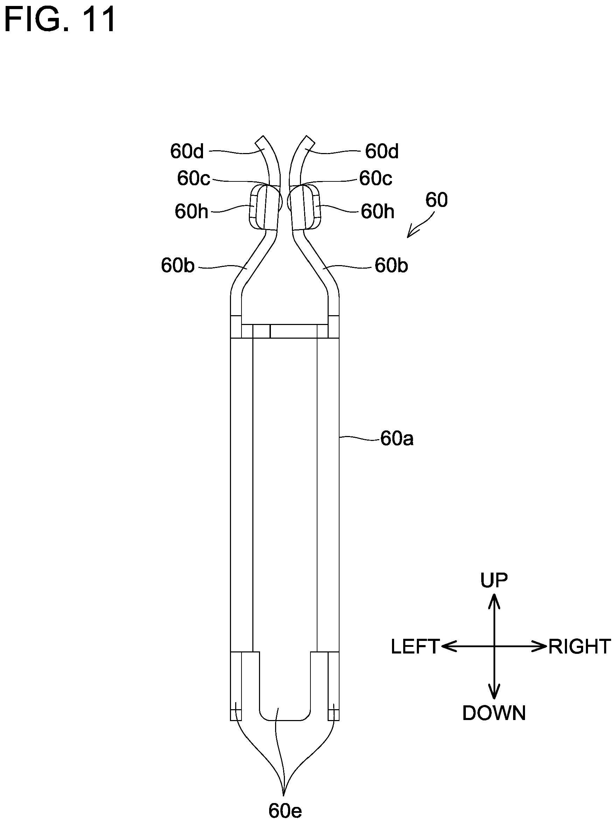

As shown in FIGS. 9 to 11, each of the power terminals 60 is fabricated by cutting and bending a metal plate. The power terminal 60 includes a support portion 60a, lower bent portions 60b, holder portions 60c, and upper bent portions 60d. The support portion 60a has a substantially rectangular tube shape that extends in the up-down direction. A cross section of the support portion 60a has a substantially rectangular shape whose longitudinal direction is along the front-rear direction. The support portion 60a has its lower end provided with support ribs 60e that protrude downward. The support ribs 60e fix the power terminal 60 to the control substrate 44 and electrically connect the power terminal 60 to the control substrate 44.

The lower bent portions 60b are provided at both left and right sides of the support portion 60a, respectively. Each of the lower bent portions 60b has a shape that is bent inward from an upper end of the support portion 60a. Each of the holder portions 60c has a plate shape that is bent and extends slightly outward from an upper end of its corresponding lower bent portion 60b. An inclination angle of each holder portion 60c is adjusted such that the angle achieves parallelism to a surface of the power terminal 204 of the electrical machine 200 or a surface of the power terminal 410 of the charger 400, that is, the angle achieves surface contact with a surface of the power terminal 204 or a surface of the power terminal 410, when the power terminals 60 are engaged with the power terminals 204 or the power terminals 410. Each of the upper bent portions 60d has a shape that is bent outward from an upper end of its corresponding holder portion 60c.

The power terminals 60 are each provided with a plurality of slits 60f. Each of the slits 60f has a U-shape that extends from an upper end of its corresponding upper bent portion 60d up to a lower end of the lower bent portion 60b. Hereinbelow, combinations, each including one pair of lower bent portions 60b, one pair of holder portions 60c, and one pair of upper bent portions 60d divided by the slits 60f, may be termed elastic holder piece pairs 60g of the power terminal 60. That is, the power terminal 60 includes the support portion 60a and the plurality of elastic holder piece pairs 60g extending upward from the support portion 60a.

Upon insertion of the power terminals 204 or the power terminals 410 into the power terminals 60, a front edge of each of the power terminals 204 or the power terminals 410 enters between the elastic holder piece pairs 60g of the corresponding power terminal 60, by which the elastic holder piece pairs 60g are opened outward and then the power terminal 204 or the power terminal 410 is held by the elastic holder piece pairs 60g. At this time, the holder portions 60c of the power terminal 60 are pressed against the power terminal 204 or the power terminal 410 due to elastic restoring force of the elastic holder piece pairs 60g, which allows engagement of the power terminal 60 with the power terminal 204 or the power terminal 410. That is, upon attachment of the battery pack 2 to the electrical machine 200 or the charger 400, the elastic holder piece pairs 60g receive the power terminal 204 or the power terminal 410 and hold the same from both sides thereof. On the other hand, upon removal of the power terminals 204 or the power terminals 410 from the power terminals 60, the engagement of the power terminals 60 with the power terminals 204 or the power terminals 410 is released. Then, the elastic holder piece pairs 60g are restored to their original shape due to the elastic restoring force of the elastic holder piece pairs 60g.

In each of the power terminals 60, insertion guide ribs 60h are respectively provided at rear ends of the rearmost elastic holder piece pair 60g, namely, the elastic holder piece pair 60g that is the first to receive the power terminal 204 or the power terminal 410 upon attachment of the battery pack 2 to the electrical machine 200 or the charger 400. The insertion guide ribs 60h each have a shape that extends rearward from rear ends of the holder portions 60c and is bent outward. Providing the insertion guide ribs 60h facilitates insertion of the power terminals 204 as well as the power terminals 410.

In each of the power terminals 60, insertion guide recesses 60i are provided in rear ends of the elastic holder piece pairs 60g other than the rearmost elastic holder piece pair 60g. Each of the insertion guide recesses 60i is a substantially arc notch that expands over the lower bent portion 60b, the holder portion 60c, the upper bent portion 60d from the rear edge of the elastic holder piece pairs 60g. Providing the insertion guide recesses 60i facilitates insertion of the power terminals 204 as well as the power terminals 410.

In each of the power terminals 60, removal guide ribs 60j are provided at front ends of the elastic holder piece pairs 60g other than the frontmost elastic holder piece pair 60g. The removal guide ribs 60j each have a shape that extends forward from the front ends of the holder portions 60c and is bent outward. Providing the removal guide ribs 60j facilitates removal of the power terminals 204 as well as the power terminals 410.

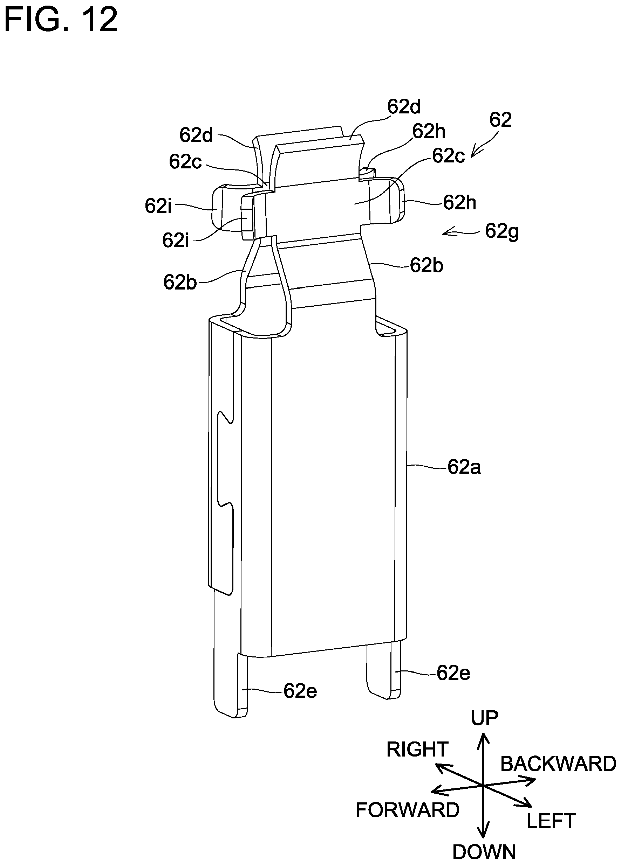

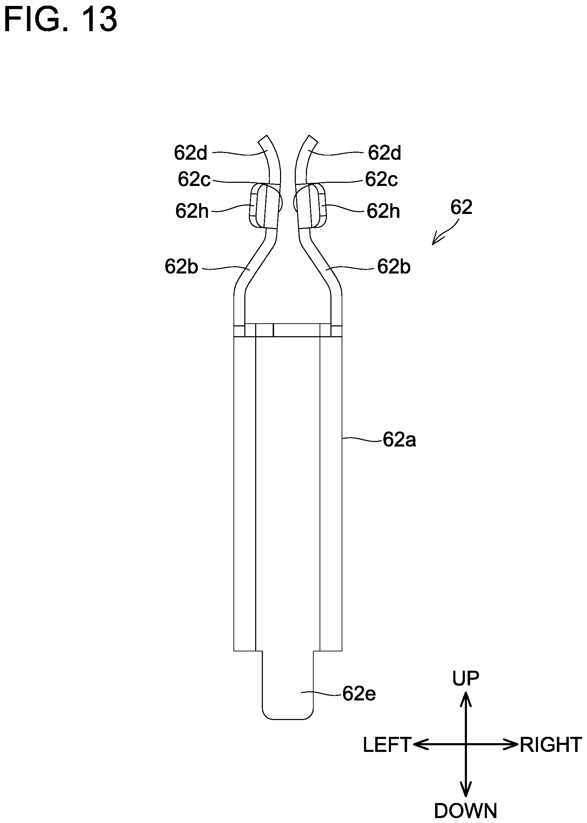

As shown in FIGS. 12 and 13, each of the signal terminals 62 is fabricated by cutting and bending a metal plate. The signal terminal 62 includes a support portion 62a, lower bent portions 62b, holder portions 62c, and upper bent portions 62d. The support portion 62a has a substantially rectangular tube shape extending in the up-down direction. A cross section of the support portion 62a has a substantially rectangular shape whose longitudinal direction is along the front-rear direction. A lower end of the support portion 62a is provided with support ribs 62e that protrude downward. The support ribs 62e fix the signal terminal 62 to the control substrate 44 and electrically connect the signal terminal 62 to the control substrate 44.

The lower bent portions 62b are provided at both left and right sides of the support portion 62a, respectively. Each of the lower bent portions 62b has a shape that is bent inward from an upper end of the support portion 62a. Each of the holder portions 62c has a plate shape that extends and is bent slightly outward from an upper end of its corresponding lower bent portion 62b. An inclination angle of each holder portion 62c is adjusted such that the angle achieves parallelism to a surface of the signal terminal 206 of the electrical machine 200 or a surface of the signal terminal 412 of the charger 400, that is, the angle achieves surface contact with a surface of the signal terminal 206 or a surface of the signal terminal 412, upon engagement of the signal terminals 62 with the signal terminals 206 or the signal terminals 412. Each of the upper bent portions 62d has a shape that is bent outward from an upper end of its corresponding holder portion 62c. Hereinbelow, combinations, each including one pair of lower bent portions 62b, one pair of holder portions 62c, and one pair of upper bent portions 62d, may be termed elastic holder piece pairs 62g of the signal terminals 62. That is, each of the signal terminals 62 includes the support portion 62a and the elastic holder piece pair 62g extending upward from the support portion 62a.

Upon insertion of the signal terminals 206 or the signal terminals 412 into the signal terminals 62, a front edge of each of the signal terminals 206 or the signal terminals 412 enters between the elastic holder piece pair 62g of the corresponding signal terminal 62, by which the elastic holder piece pair 62g is opened outward and then the signal terminal 206 or the signal terminal 412 is held by the elastic holder piece pair 62g. At this time, the holder portions 62c of the signal terminal 62 are pressed against the signal terminal 206 or the signal terminal 412 due to elastic restoring force of the elastic holder piece pair 62g, which allows engagement of the signal terminal 62 with the signal terminal 206 or the signal terminal 412. That is, upon attachment of the battery pack 2 to the electrical machine 200 or the charger 400, the elastic holder piece pairs 62g receive the signal terminals 206 or the signal terminals 412 and hold the same from both sides thereof. On the other hand, upon removal of the signal terminals 206 or the signal terminals 412 from the signal terminals 62, the engagement of the signal terminals 62 with the signal terminals 206 or the signal terminals 412 is released. Then, the elastic holder piece pairs 62g are restored to their original shape due to the elastic restoring force of the elastic holder piece pairs 62g.

In each of the signal terminal 62, insertion guide ribs 62h are provided at rear ends of the elastic holder piece pair 62g. Each of the insertion guide ribs 62h has a shape that extends rearward from a rear end of its corresponding holder portion 62c and is bent outward. Providing the insertion guide ribs 62h facilitates insertion of the signal terminals 206 as well as the signal terminals 412.

In each of the signal terminals 62, removal guide ribs 62i are provided at front ends of the elastic holder piece pair 62g. Each of the removal guide ribs 62i has a shape that extends frontward from a front end of its corresponding holder portion 62c and is bent outward. Providing the removal guide ribs 62i facilitates removal of the signal terminals 206 as well as the signal terminals 412.

As shown in FIG. 5, the display substrate 46 is connected to the control substrate 44 via signal lines 64. The display substrate 46 is disposed near a rear surface of the display portion 32 of the lower case 16. The display substrate 46 includes an LED 46a that is configured to change display contents of the indicator 32a and a switch 46b that is configured to detect an operation on the button 32b. The right cell holder 48 is provided with a guide 66 that holds the signal lines 64 to prevent the signal lines 64 from becoming loose.

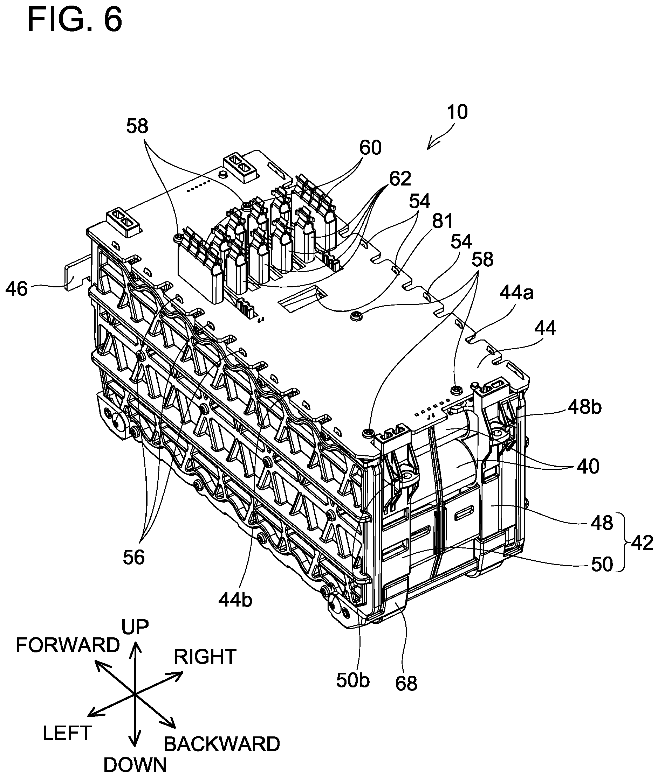

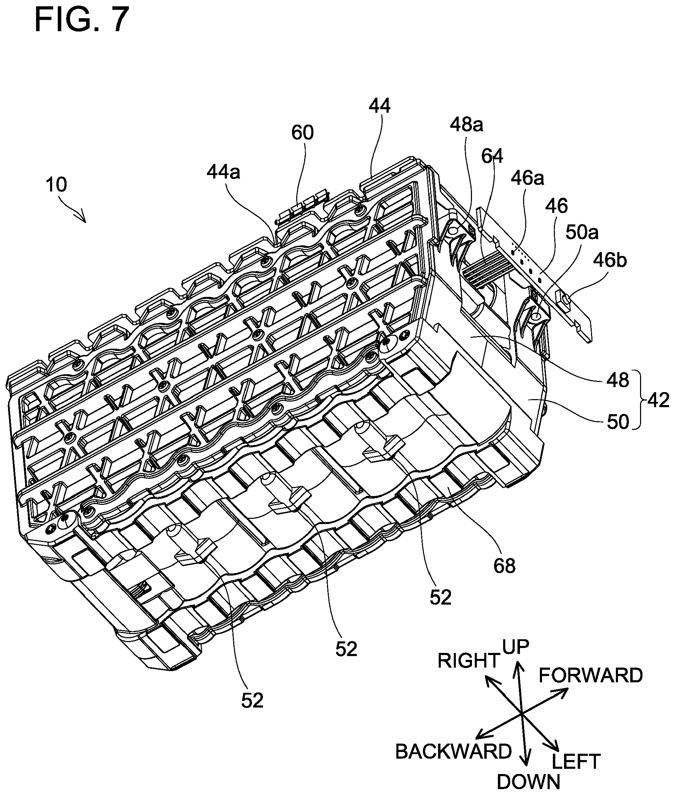

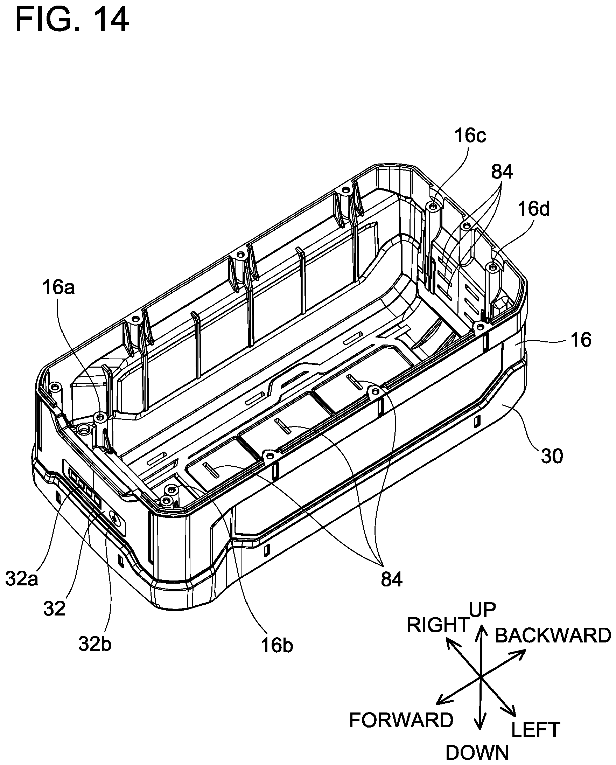

A front portion of the right cell holder 48 is provided with a screw receiver 48a. A front portion of the left cell holder 50 is provided with a screw receiver 50a. The screw receivers 48a, 50a are disposed above a center of the cell holder 42 in the up-down direction. As shown in FIG. 6, a rear portion of the right cell holder 48 is provided with a screw receiver 48b. A rear portion of the left cell holder 50 is provided with a screw receiver 50b. The screw receivers 48b, 50b are disposed above the center of the cell holder 42 in the up-down direction. The screw receivers 48a, 50a are disposed below the screw receivers 48b, 50b. As shown in FIG. 14, in an inner front portion of the lower case 16, screw bosses 16a, 16b are provided at positions corresponding to the screw receivers 48a, 50a. In an inner rear portion of the lower case 16, screw bosses 16c, 16d are provided at positions corresponding to the screw receivers 48b, 50b. As shown in FIG. 7, a cushion material 68 is attached to a lower portion of the cell holder 42. The cushion material 68 is rubber, for example.

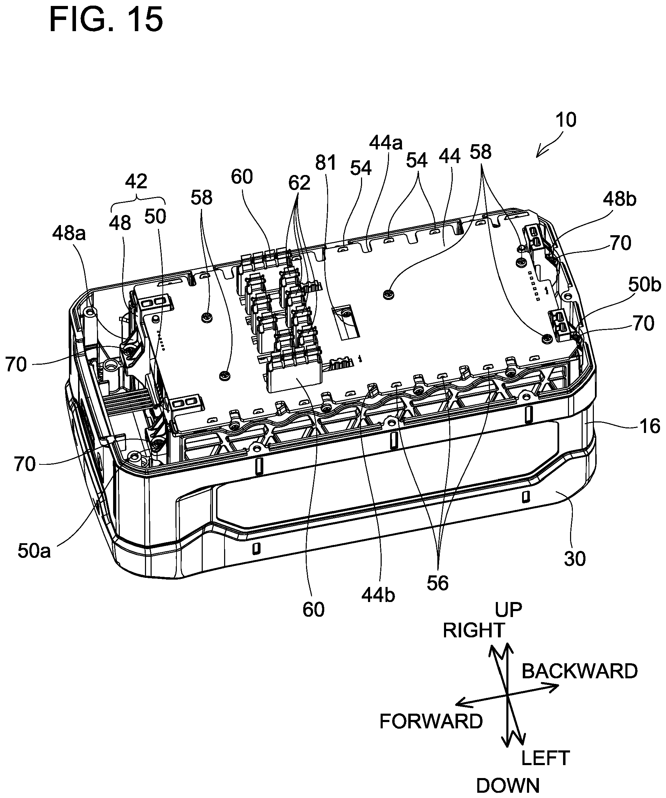

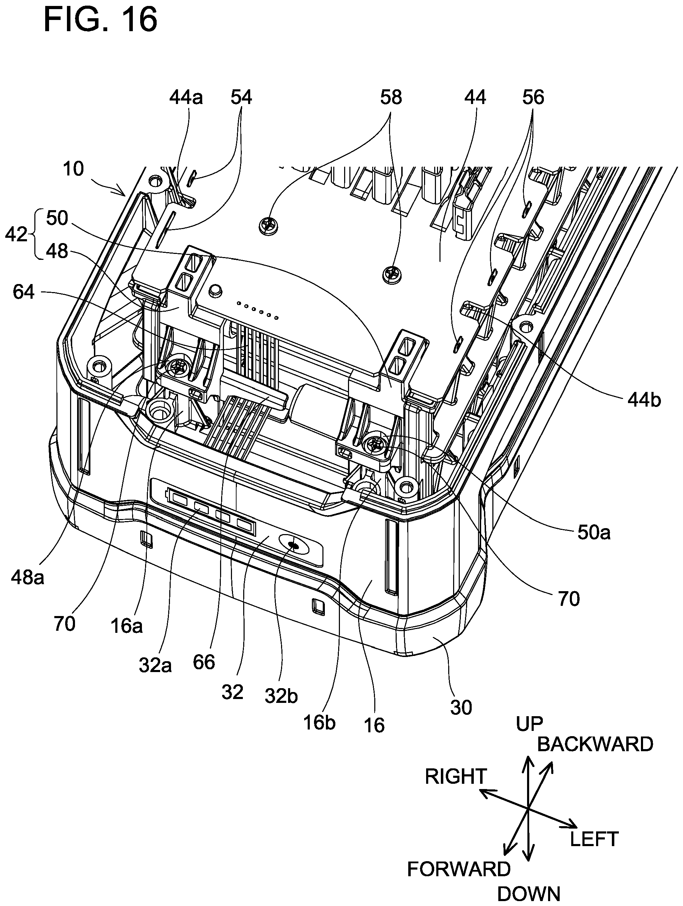

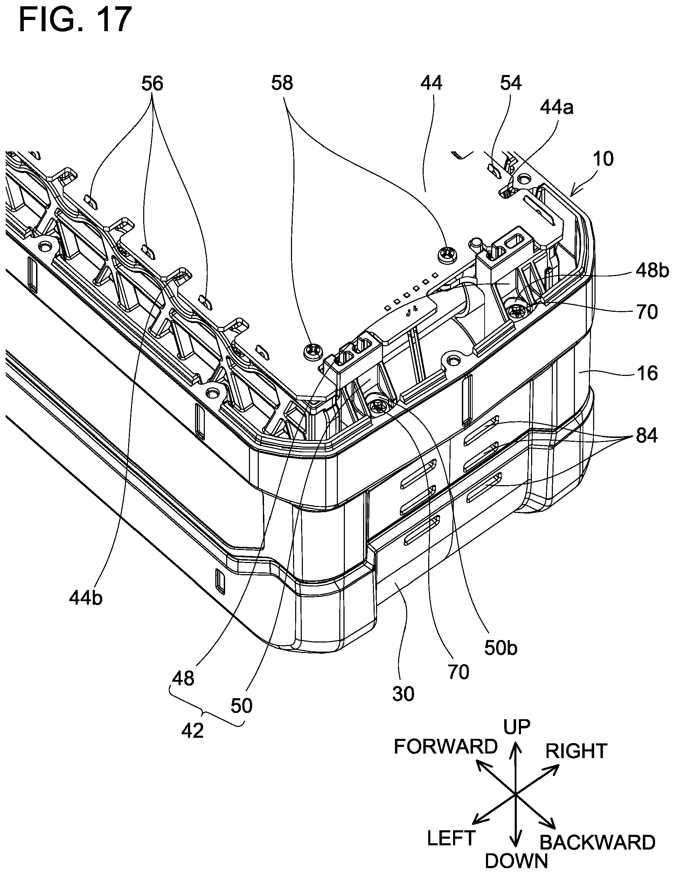

As shown in FIG. 15, the battery module 10 is attached to the lower case 16 with the upper case 14 detached. In this attachment, the battery module 10 is fixed to the lower case 16 by metal screws 70 in a state of being placed on an inner bottom surface of the lower case 16. As shown in FIG. 16, the front screws 70 are screwed into the screw bosses 16a, 16b of the lower case 16 from above the screw receivers 48a, 50a of the cell holder 42. As shown in FIG. 17, the rear screws 70 are screwed into the screw bosses 16c, 16d of the lower case 16 from above the screw receivers 48b, 50b of the cell holder 42. By doing so, the battery module 10 can be firmly fixed to the lower case 16. Since the cushion material 68 is interposed between the lower surface of the battery module 10 and the inner bottom surface of the lower case 16, transmission of vibration and impact can be suppressed between the battery module 10 and the lower case 16.

As shown in FIGS. 2 to 4, in a state where the upper case 14 is attached to the lower case 16, heads of the screws 70 are not exposed to outside of the battery pack 2 because they are completely covered by the upper case 14. Therefore, an influence of static electricity or the like outside battery pack 2 can be suppressed from being exerted onto the battery module 10 in the battery pack 2 through the screws 70.

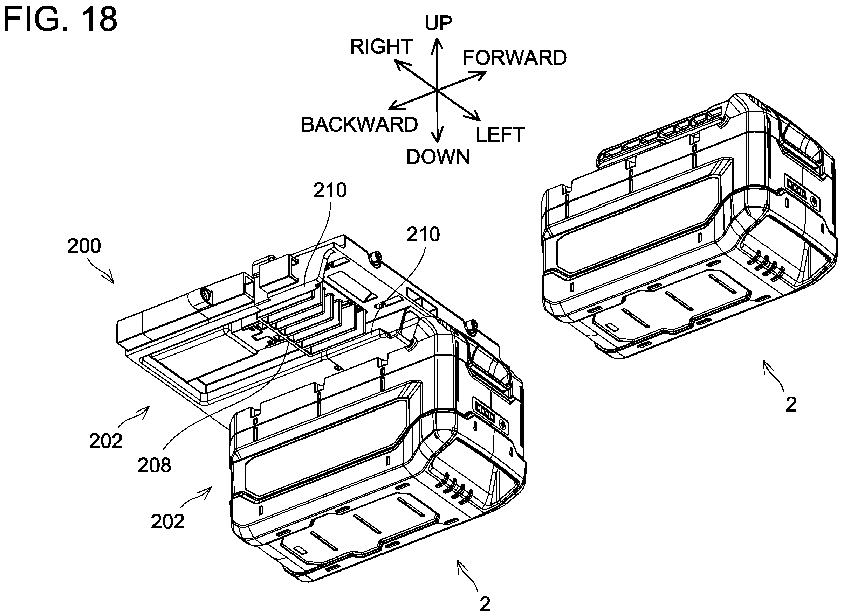

As shown in FIG. 18, the electrical machine 200 includes a housing (not shown) and battery pack mounts 202 provided at the housing and each configured to allow the battery pack 2 to be attached thereto and detached therefrom. The battery pack 2 can be attached to and detached from each of the battery pack mounts 202 by being slid in predetermined sliding directions with respect to the battery pack mount 202. In an example shown in FIG. 18, the electrical machine 200 includes two battery pack mounts 202, thus two battery packs 2 can be attached thereto. Unlike this example, the electrical machine 200 may include only one battery pack mount 202 and only one battery pack 2 may be attached thereto, or the electrical machine 200 may include three or more battery pack mounts 202 and three or more battery packs 2 may be attached thereto.

As shown in FIG. 19, the battery pack mount 202 includes the power terminals 204, the signal terminals 206, a protective rib 208, and the slide rails 210. In a state where the battery pack 2 is attached to the battery pack mount 202, the power terminals 204 of the electrical machine 200 are engaged with the power terminals 60 of the battery pack 2 and are electrically connected thereto, while the signal terminals 206 of the electrical machine 200 are engaged with the signal terminals 62 of the battery pack 2 and are electrically connected thereto. The protective rib 208 includes side plates 208a and a rear plate 208b. Each of the side plates 208a has a plate shape along the front-rear direction and the up-down direction, and the side plates 208a are disposed on both left and right sides of each power terminal 204 as well as on both left and right sides of each signal terminal 206. The rear plate 208b has a plate shape along the right-left direction and the up-down direction, is disposed behind the power terminals 204 and the signal terminals 206, and is coupled to each of the side plates 208a. The slide rails 210 extend along the front-rear direction and are disposed respectively at left and right ends of the battery pack mount 202. The slide rails 210 are configured to slidably engage with the slide rails 20 of the battery pack 2 upon attachment and detachment of the battery pack 2 to and from the electrical machine 200.

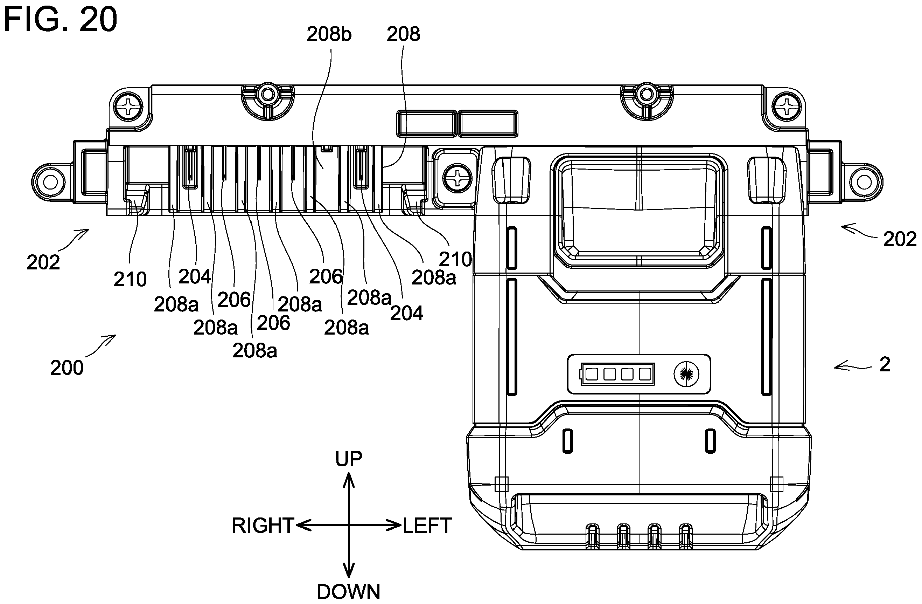

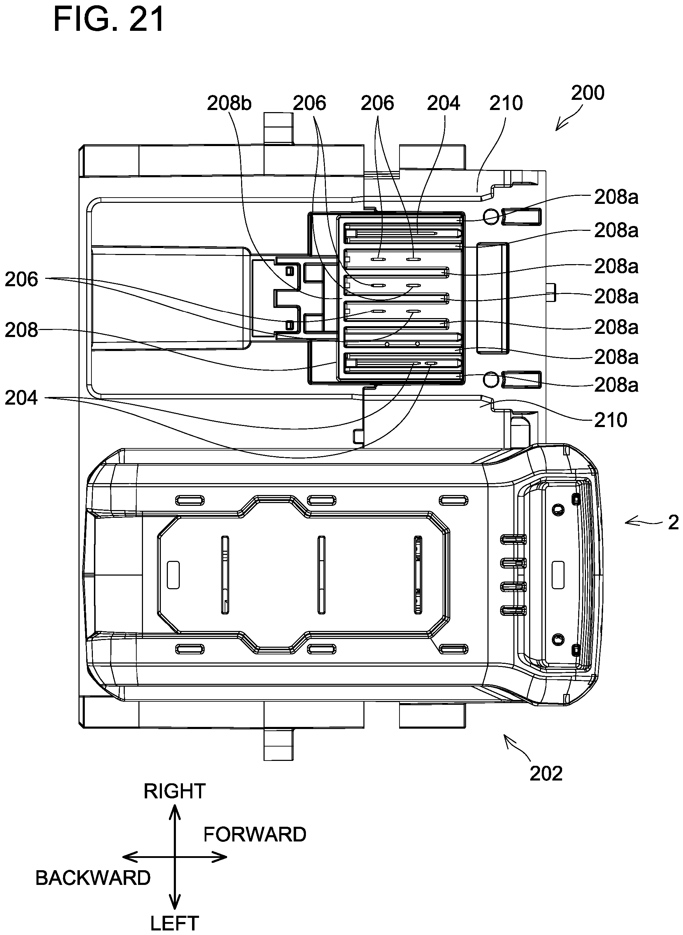

As shown in FIG. 20, lower ends of the side plates 208a and the rear plate 208b are located below lower ends of the power terminals 204 and the signal terminals 206. Further, as shown in FIG. 21, front ends of the side plates 208a are located forward relative to front ends of the power terminals 204 and the signal terminals 206. Therefore, even in a state where the battery pack 2 is not attached to the battery pack mount 202 and the battery pack mount 202 is exposed outside, the user can be prevented from accidentally touching the power terminals 204 and/or the signal terminals 206. As especially shown in FIG. 18, in a case where the electrical machine 200 allows a plurality of battery packs 2 to be attached thereto, the battery packs 2 are attached to some of the battery pack mounts 202, and no battery packs 2 are attached to the rest of the battery pack mounts 202, a high voltage may be outputted to the power terminals 204 and/or the signal terminals 206 of the battery pack mounts 202 to which no battery packs 2 are attached. Even in such a case, the electrical machine 200 of the present embodiment can prevent the user from accidentally touching the power terminals 204 and/or the signal terminals 206, thus can secure user's safety.

As shown in FIG. 21, the front ends of the side plates 208a that are disposed on both sides of each power terminal 204 are located forward relative to the front ends of the other side plates 208a. Therefore, the user can be prevented from touching the power terminals 204 with much certainty.

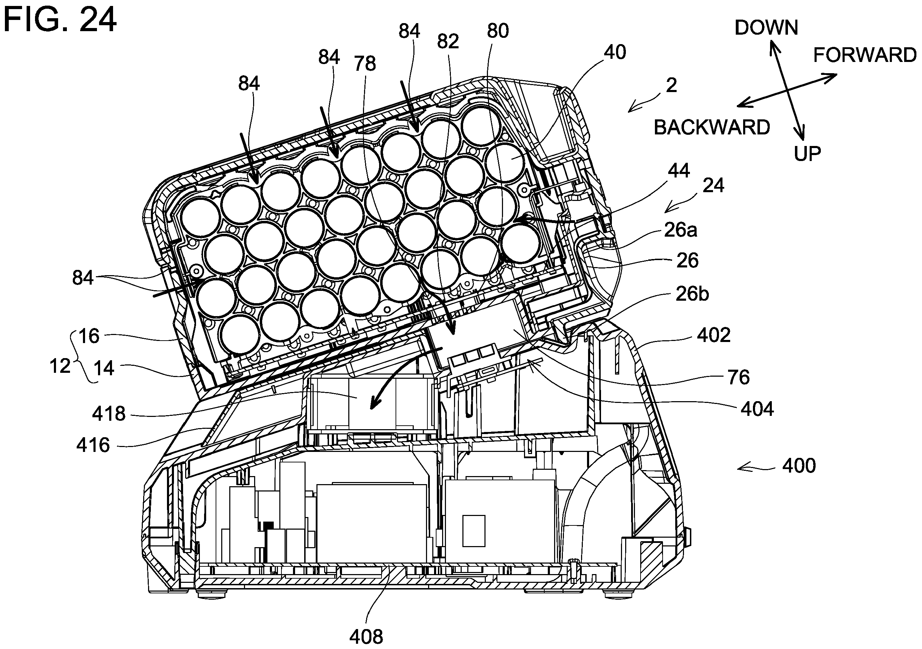

As shown in FIG. 22, the charger 400 includes the housing 402; battery pack mounts 404 provided at the housing 402 and each configured to allow the battery pack 2 to be attached thereto and detached therefrom; a power cable 406 that extends from the housing 402 and is connectable to an alternating-current source; and a control substrate 408 (see FIG. 24) accommodated in the housing 402. The battery pack 2 can be attached to and detached from each of the battery pack mounts 404 by being slid in predetermined sliding directions with respect to the battery pack mount 404. In an example shown in FIG. 22, the charger 400 includes two battery pack mounts 404, thus two battery packs 2 can be attached thereto. Unlike this example, the charger 400 may include only one battery pack mount 404 and only one battery pack 2 may be attached thereto, or the charger 400 may include three or more battery pack mounts 404 and three or more battery packs 2 may be attached thereto. The control substrate 408 is configured to convert alternating-current power supplied through the power cable 406 into direct-current power and charge the battery packs 2 attached to the battery pack mounts 404 with the power.

As shown in FIG. 23, each of the battery pack mounts 404 includes the power terminals 410, the signal terminals 412, the slide rails 414, a terminal cover 416, and a blower fan 418 (see FIG. 24). The power terminals 410, the signal terminals 412, and the blower fan 418 are connected to the control substrate 408. In a state where the battery pack 2 is attached to the battery pack mount 404, the power terminals 410 of the charger 400 are engaged with the power terminals 60 of the battery pack 2 and are electrically connected thereto, while the signal terminals 412 of the charger 400 are engaged with the signal terminals 62 of the battery pack 2 and are electrically connected thereto. The terminal cover 416 is slidable between a protection position (see FIG. 22) where the power terminals 410 and the signal terminals 412 are covered by the terminal cover 416 and a retraction position (see FIG. 23) where the power terminals 410 and the signal terminals 412 are exposed. The terminal cover 416 is biased toward the protection position by a compression spring (not shown). Upon attachment of the battery pack 2 to the charger 400, the terminal cover 416 is pushed by the upper case 14 of the battery pack 2 such that it is moved from the protection position to the retraction position. The blower fan 418 takes in air from the battery pack mount 404 when the battery pack 2 is charged.

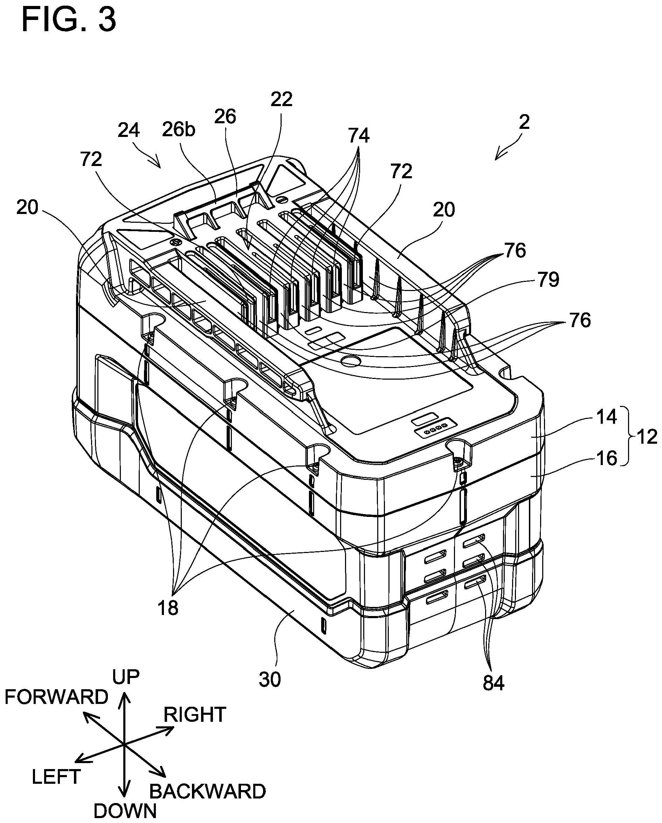

As shown in FIG. 3, in the battery pack 2, the terminal receiver 22 of the upper case 14 is provided with power terminal openings 72 and signal terminal openings 74. The power terminal openings 72 are disposed corresponding to the power terminals 60 of the control substrate 44, and positions and a shape of the power terminal openings 72 are determined such that the power terminals 204 of the electrical machine 200 and the power terminals 410 of the charger 400 can pass therethrough. The signal terminal openings 74 are disposed corresponding to the signal terminals 62 of the control substrate 44, and positions and a shape of the signal terminal openings 74 are determined such that the signal terminals 206 of the electrical machine 200 and the signal terminals 412 of the charger 400 can pass therethrough. Upon attachment of the battery pack 2 to the electrical machine 200, the power terminals 204 enter the power terminal openings 72 and engage with the power terminals 60, and the signal terminals 206 enter the signal terminal openings 74 and engage with the signal terminals 62. Upon attachment of the battery pack 2 to the charger 400, the power terminals 410 enter the power terminal openings 72 and engage with the power terminals 60, and the signal terminals 412 enter the signal terminal openings 74 and engage with the signal terminals 62.

At the terminal receiver 22 of the battery pack 2, the upper case 14 is provided with recessed grooves 76 that are disposed on both left and right sides of each power terminal opening 72 and are disposed on both left and right sides of each signal terminal opening 74. Positions and a shape of the recessed grooves 76 are determined such that the recessed grooves 76 can receive the side plates 208a of the protective rib 208 of the electrical machine 200. Therefore, lower ends of the recessed grooves 76 are located below lower ends of the power terminal openings 72 and the signal terminal openings 74, and front ends of the recessed grooves 76 are located forward relative to front ends of the power terminal openings 72 and the signal terminal openings 74. Further, each of the recessed grooves 76 is opened in two directions, namely, in the up direction and in the rear direction.

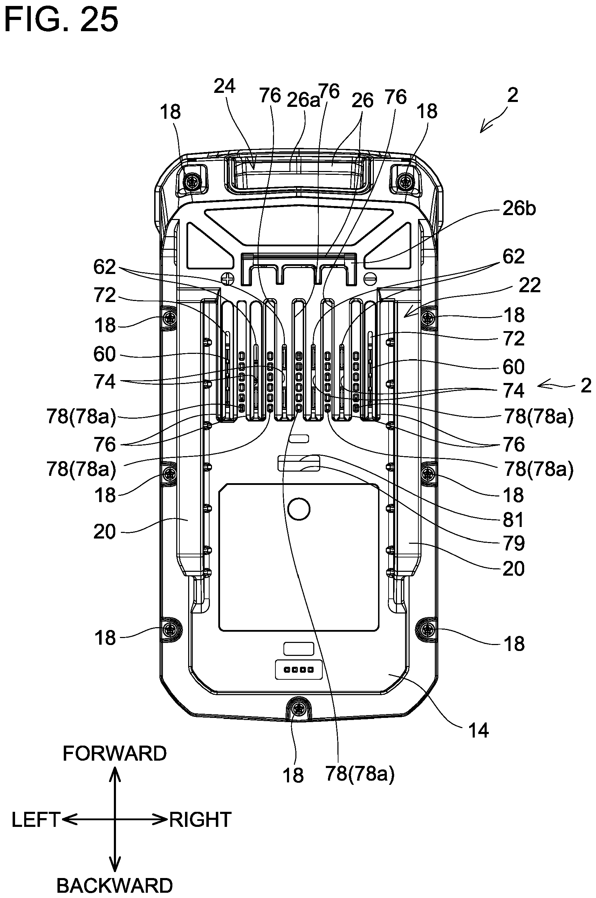

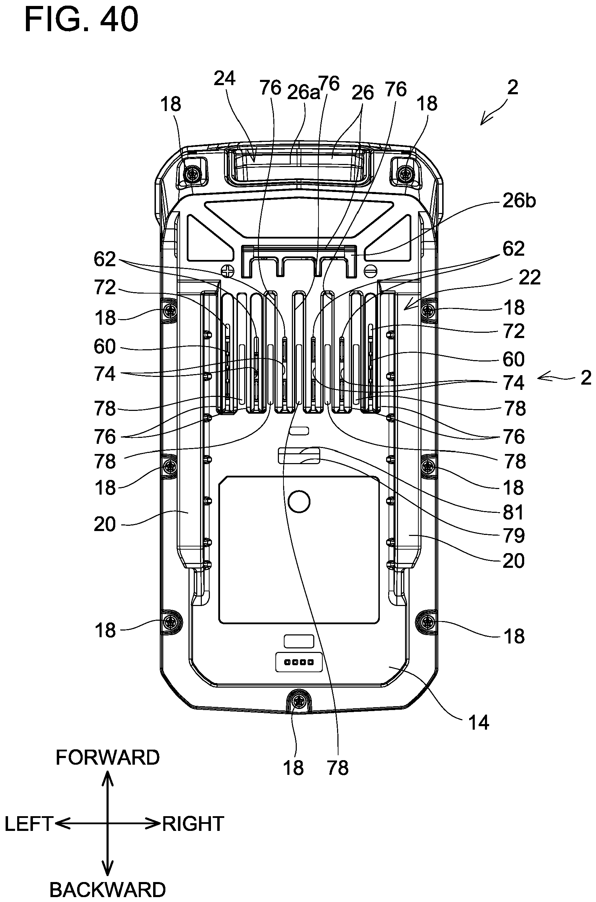

As shown in FIG. 25, vent holes 78 are provided in lower surfaces of the recessed grooves 76 that are disposed between each power terminal 60 and its adjacent signal terminal 62 as well as in lower surfaces of the recessed grooves 76 that are disposed between each pair of signal terminals 62 adjacent to each other in the right-left direction. Each of the vent holes 78 includes a plurality of holes 78a disposed in the lower surface of one recessed groove 76. This allows for a small size of individual holes 78a compared to an example shown in FIG. 40 where one large vent hole 78 is provided in the lower surface of one recessed groove 76, thus can suppress foreign matter from entering inside of the battery pack 2 from the outside through the vent holes 78. Further, a vent hole 79 is provided in the upper surface of the upper case 14 at a position offset rearward from the terminal receiver 22.

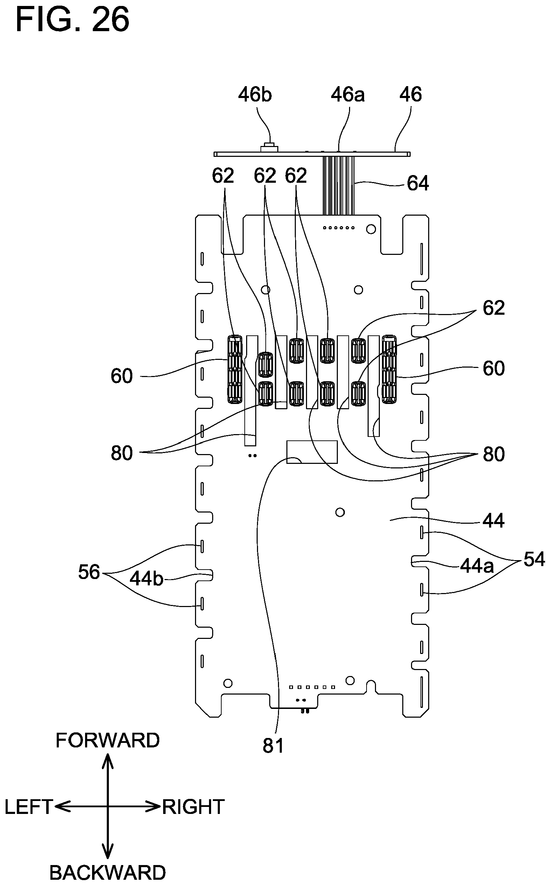

As shown in FIG. 26, in the control substrate 44, slits 80 are provided between each power terminal 60 and its adjacent signal terminal 62 as well as between each pair of the signal terminals 62 adjacent to each other in the right-left direction. The slits 80 are disposed at positions facing the vent holes 78 of the upper case 14. Providing the slits 80 in the control substrate 44 can suppress short circuit from occurring between each power terminal 60 and its adjacent signal terminal 62 and/or between each pair of the adjacent signal terminals 62 in the right-left direction, even when a conductive substance, such as water, enters inside of the battery pack 2 and adheres to the control substrate 44. Further, a slit 81 is provided in the control substrate 44 at a position offset rearward from the signal terminals 62. The slit 81 is disposed at a position facing the vent hole 79 of the upper case 14. A right end of the control substrate 44 is provided with notches 44a that extend between the lead plates 54 adjacent to one another. Providing the notches 44a in the control substrate 44 can suppress short circuit from occurring between the lead plates 54 adjacent to one another in the front-rear direction, even when a conductive substance, such as water, enters inside of the battery pack 2 and adheres to the control substrate 44. A left end of the control substrate 44 is provided with notches 44b that extend between the lead plates 56 adjacent to one another. Providing the notches 44b in the control substrate 44 can suppress short circuit from occurring between the lead plates 56 adjacent to one another in the front-rear direction, even when a conductive substance, such as water, enters inside of the battery pack 2 and adheres to the control substrate 44.

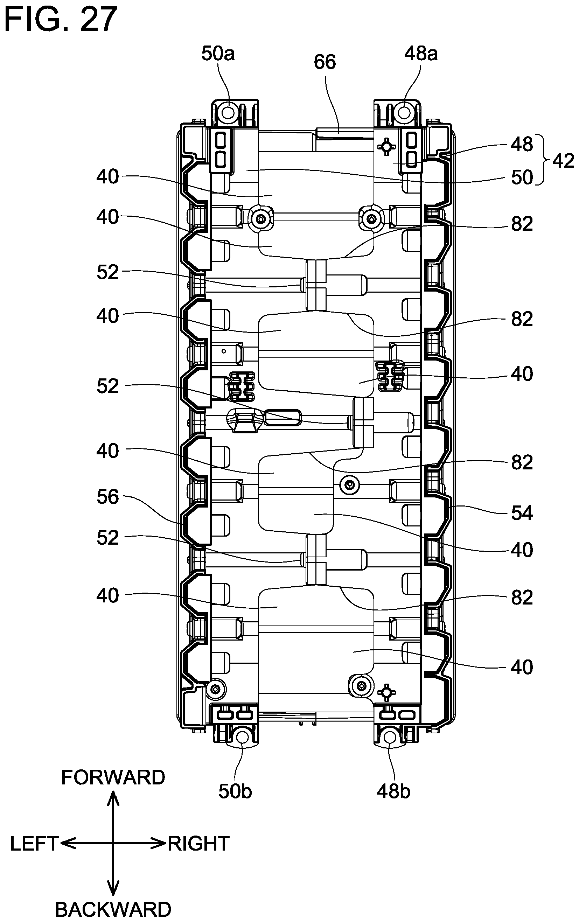

As shown in FIG. 27, an upper surface of the cell holder 42 is provided with openings 82. The vent holes 78 of the upper case 14 and the slits 80 of the control substrate 44 are disposed at positions facing one of the openings 82 of the cell holder 42. Further, the vent hole 79 of the upper case 14 and the slit 81 of the control substrate 44 are disposed at positions facing another one of the openings 82 of the cell holder 42.

As shown in FIG. 24, the lower surface and rear surface of the lower case 16 are provided with air supply holes 84. Further, the hook mount 24 of the upper case 14 serves as an air supply hole 84 since air can flow through a clearance between the hook 26 and the upper case 14.

When the blower fan 418 of the charger 400 is driven with the battery pack 2 attached to the charger 400, the blower fan 418 takes in air from the battery pack mount 404. When this happens, air flows into the inside of the battery pack 2 from the outside through the air supply holes 84. The air, which has entered inside of the battery pack 2, flows through spaces between the battery cells 40 toward the openings 82 of the cell holder 42. During this, the battery cells 40 are cooled by the air flowing around them. Most part of the air having reached the openings 82 of the cell holder 42 flows through the slits 80 of the control substrate 44, flows through the vent holes 78 of the upper case 14, and then flows into the recessed grooves 76 of the terminal receiver 22. The air, which has entered the recessed grooves 76, flows through the battery pack mount 404 of the charger 400 and then reaches the blower fan 418. Further, a part of the air having reached the openings 82 of the cell holder 42 flows through the slit 81 of the control substrate 44, flows through the vent hole 79 of the upper case 14, and then reaches the blower fan 418 of the charger 400. Further, another part of the air having reached the openings 82 of the cell holder 42 flows through the notches 44a, 44b of the control substrate 44, further flows through the vent holes 78, 79 of the upper case 14, and then reaches the blower fan 418 of the charger 400. As shown in FIG. 23, the housing 402 of the charger 400 is provided with an air discharge hole 402a. The air drawn into the housing 402 by the blower fan 418 flows through the inside of the housing 402 of the charger 400 and then is discharged to the outside through the air discharge hole 402a.

In the battery pack 2, the vent holes 78, 79 of the upper case 14 are disposed to face the slits 80, 81 of the control substrate 44. Such a configuration allows air under the control substrate 44 to be taken in through the slits 80, 81 as air flows out from the vent holes 78, 79. Therefore, a part of the plurality of battery cells 40 that is located right under the control substrate 44 can be cooled sufficiently.

Further, in the battery pack 2, the openings 82 of the cell holder 42 are disposed to face the slits 80, 81 of the control substrate 44. Such a configuration allows air to flow toward the openings 82 of the cell holder 42 from the spaces between the battery cells 40 as air is taken in through the slits 80, 81. Therefore, a part of the plurality of battery cells 40 that is located near the center can be cooled sufficiently.

The control substrate 44 may not be provided with the slit 81, and may be provided with the slits 80 only. Corresponding to this, the case 14 may not be provided with the vent hole 79, and may be provided with the vent holes 78 only.

As shown in FIG. 40, in the upper case 14, the lower surface of each recessed groove 76 may be provided with one large vent hole 78. In this case, air can easily flow through these vent holes 78 and the cooling performance for the battery cells 40 can be improved, compared to the example shown in FIG. 25 where the lower surface of each recessed groove 76 is provided with the plurality of holes 78a.

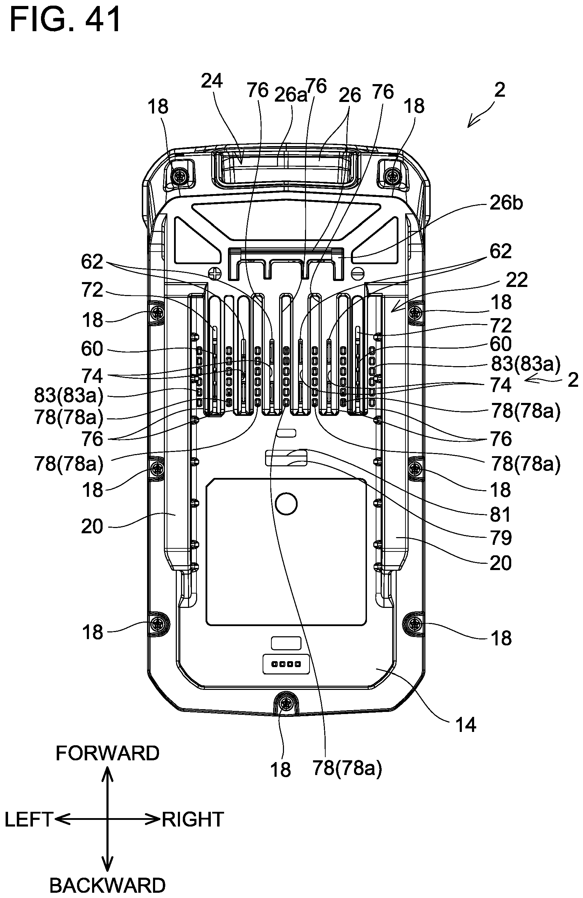

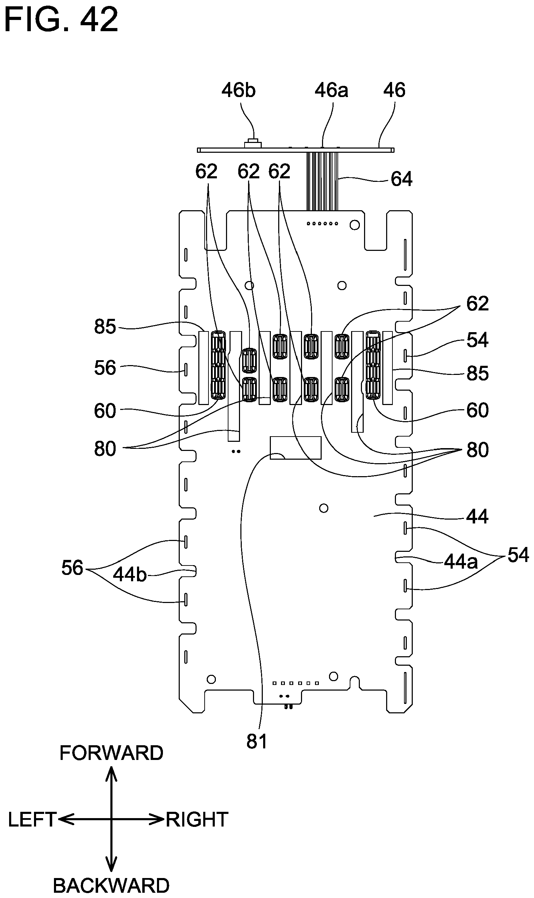

As shown in FIG. 41, in the upper case 14, a vent hole 83 may be provided in the lower surface of each of the recessed grooves 76 that are disposed between each power terminal 60 and the slide rail 20 adjacent thereto. Each vent hole 83 may include a plurality of holes 83a provided in the lower surface of one recessed groove 76. As shown in FIG. 42, in the control substrate 44, slits 85 may be provided between each power terminal 60 and the lead plates 54, 56. Providing the slits 85 in the control substrate 44 can suppress short circuit from occurring between the power terminals 60 and the lead plates 54, 56, even when a conductive substance, such as water, enters inside of the battery pack 2 and adheres to the control substrate 44. The slits 85 may be disposed at positions facing the vent holes 83 of the upper case 14. According to the configurations of FIGS. 41 and 42, a larger amount of air flows through the spaces between the battery cells 40 by the blower fan 418 of the charger 400 being driven, and thus the cooling performance for the battery cells 40 can be improved.

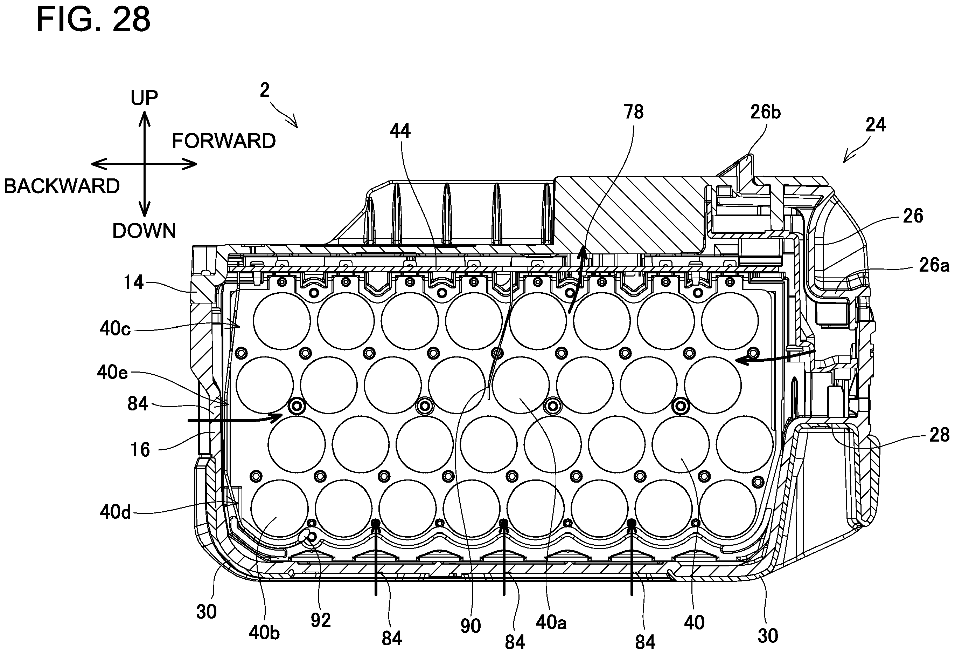

As shown in FIG. 28, the battery pack 2 includes a first thermistor 90 and a second thermistor 92. The first thermistor 90 and the second thermistor 92 are both connected to the control substrate 44. The first thermistor 90 is a film type thermistor, for example. The second thermistor 92 is a dip type thermistor, for example. Generally, film type thermistors have high detection accuracy for temperature, however, it is difficult for them to extend to a position far apart from the control substrate 44. Contrary to this, dip type thermistors have low detection accuracy for temperature, however, it is easy for them to extend to a position far apart from the control substrate 44. In the battery pack 2, the first thermistor 90 detects a temperature of a battery cell 40a that is located near the center among the battery cells 40 arranged in the up-down direction and in the front-rear direction, while the second thermistor 92 detects a temperature of a battery cell 40b that is located near the outer edge among the battery cells 40 arranged in the up-down direction and in the front-rear direction. In this case, the first thermistor 90 is disposed closest to the battery cell 40a among the plurality of battery cells 40 and detects a temperature at a position that is surrounded by the other battery cells 40. The second thermistor 92 is disposed closest to the battery cell 40b among the plurality of battery cells 40 and detects a temperature at a position that is not surrounded by the other battery cells 40. Further, the first thermistor 90 detects the temperature at a position where at least one battery cell 40 is interposed between the position and the upper case 14 and/or the lower case 16, while the second thermistor 92 detects the temperature at a position where no battery cells 40 are interposed between the position and the lower case 16. Further, the first thermistor 90 detects the temperature at a position where a distance from the position to the vent holes 78 through which air flows out from the inside of the battery pack 2 to the outside is shorter than a distance from the position to the air supply holes 84 through which air flows into the battery pack 2 from the outside. The second thermistor 92 detects a temperature at a position where a distance from the position to the air supply holes 84 through which air flows into the battery pack 2 from the outside is shorter than a distance from the position to the vent holes 78 through which air flows out from the inside of the battery pack 2 to the outside.

Generally, among the battery cells 40 arranged in the up-down direction and in the front-rear direction, the battery cells 40 that are located near the center tend to have a high temperature because it is difficult for them to dissipate their heat, while the battery cells 40 located near the outer edge tend to have a low temperature because it is easy for them to dissipate their heat. Further, in a configuration where the battery cells 40 are cooled by air that flows in through the air supply holes 84 and flows out through the vent holes 78, air flowing in through the air supply holes 84 has a low temperature and the air flowing out through the vent holes 78 has a high temperature, thus the battery cells 40 located close to the air supply holes 84 tend to have a low temperature, and the battery cells 40 located close to the vent holes 78 tend to have a high temperature. Therefore, in a state where the first thermistor 90 and the second thermistor 92 are disposed as described above, the battery cell 40a whose temperature is detected by the first thermistor 90 has the highest temperature during charge among the battery cells 40, while the battery cell 40b whose temperature is detected by the second thermistor 92 has the lowest temperature during charge among the battery cells 40. As such, by using the first thermistor 90 and the second thermistor 92, the temperature of the battery cell 40a, which is the highest among the battery cells 40 during charge of the battery pack 2, and the temperature of the battery cell 40b, which is the lowest among the battery cells 40 during the charge, can be obtained.

Among the plurality of battery cells 40 arranged in the up-down and front-rear directions, battery cells 40 that are arranged in the front-rear direction in an uppermost row may be termed an upper battery cell group 40c, battery cells 40 that are arranged in the front-rear direction in a lowermost row may be termed a lower battery cell group 40d, and battery cells 40 that are arranged in the up-down and front-rear directions between the upper battery cell group 40c and the lower battery cell group 40d may be termed a middle battery cell group 40e. The battery cell 40a of which temperature is detected by the first thermistor 90 is included in the middle battery cell group 40e, while the battery cell 40b of which temperature is detected by the second thermistor 92 is included in the lower battery cell group 40d.

The charger 400 charges the battery pack 2 when receiving a charging start instruction from the battery pack 2 while the battery pack 2 is attached to one of or each of the battery pack mounts 404. During the charge to the battery pack 2, the charger 400 receives from the battery pack 2 an allowable charging voltage, an allowable charging current, a charging-current-reduction start voltage, and a cut-off current as charging parameters. Then, the charger 400 charges the battery pack 2 at a charging voltage that is equal to or lower than the allowable charging voltage and a charging current that is equal to or lower than the allowable charging current. When the charging voltage reaches the charging-current-reduction start voltage during the charge to the battery pack 2, the charger 400 gradually reduces the charging current. When the charging current is reduced to the cut-off current during the charge to the battery pack 2, the charger 400 terminates the charge to the battery pack 2. When receiving a charging termination instruction from the battery pack 2 during the charge to the battery pack 2, the charger 400 terminates the charge to the battery pack 2 at that time.

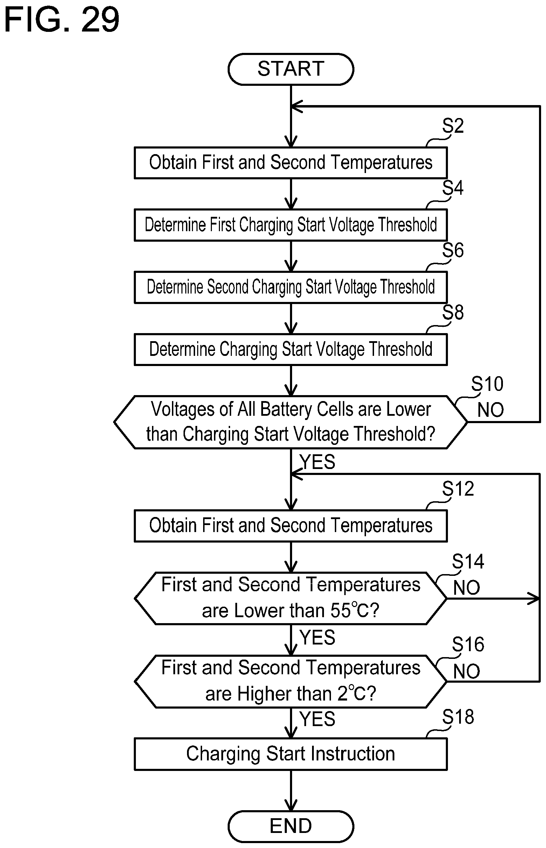

Various processes executed by the control substrate 44 in connection with the charge to the battery pack 2 will be described hereinbelow. The control substrate 44 of the battery pack 2 executes a charging-start determination process shown in FIG. 29 while the battery pack 2 is attached to one of or each of the battery pack mounts 404 of the charger 400.

In S2, the control substrate 44 obtains a temperature detected by the first thermistor 90 as a first temperature as well as a temperature detected by the second thermistor 92 as a second temperature.

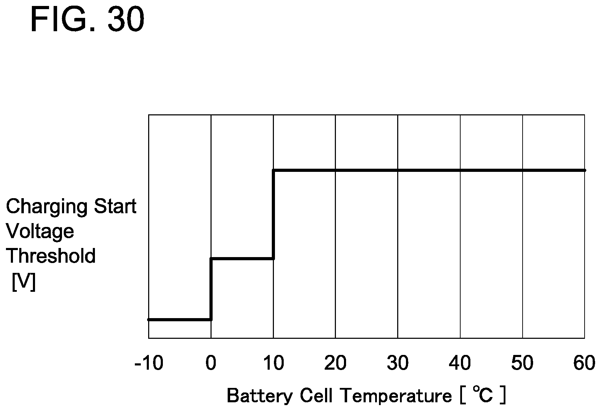

In S4, the control substrate 44 determines a first charging-start voltage threshold. The control substrate 44 stores in advance a correspondence relationship between battery cell temperature and charging-start voltage threshold, which is shown in FIG. 30. In the correspondence relationship of FIG. 30, charging-start voltage thresholds for low battery cell temperatures are set lower than a charging-start voltage threshold for an ordinary battery cell temperature, while charging-start voltage thresholds for high battery cell temperatures are set equal to the charging-start voltage threshold for the ordinary battery cell temperature. The control substrate 44 determines the first charging-start voltage threshold by using the first temperature and the correspondence relationship of FIG. 30.

In S6, the control substrate 44 determines a second charging-start voltage threshold. The control substrate 44 determines the second charging-start voltage threshold by using the second temperature and the correspondence relationship of FIG. 30.

In S8, the control substrate 44 determines a charging-start voltage threshold. In the present embodiment, the control substrate 44 determines lower one of the first and second charging-start voltage thresholds as the charging-start voltage threshold.

In S10, the control substrate 44 determines whether voltages of all the battery cells 40 are lower than the charging-start voltage threshold. In a case where at least one battery cell 40 has a voltage that is equal to or higher than the charging-start voltage threshold (in case of NO), the process returns to S2. In a case where all the battery cells 40 have voltages that are lower than the charging-start voltage threshold (in case of YES), the process proceeds to S12.

In S12, the control substrate 44 obtains a temperature detected by the first thermistor 90 as a first temperature as well as a temperature detected by the second thermistor 92 as a second temperature.

In S14, the control substrate 44 determines whether both the first temperature and the second temperature are lower than a predetermined charging-start upper limit temperature (e.g., 55°C). In a case where at least one of the first temperature and the second temperature is equal to or higher than the charging-start upper limit temperature (in case of NO), the process returns to S12. In a case where both the first temperature and the second temperature are lower than the charging-start upper limit temperature (in case of YES), the process proceeds to S16.

In S16, the control substrate 44 determines whether both the first temperature and the second temperature are higher than a predetermined charging-start lower limit temperature (e.g., 2°C). In a case where at least one of the first temperature and the second temperature is equal to or lower than the charging-start lower limit temperature (in case of NO), the process returns to S12. In a case where both the first temperature and the second temperature are higher than the charging-start lower limit temperature (in case of YES), the process proceeds to S18.

In S18, the control substrate 44 outputs the charging start instruction to the charger 400. The charger 400 thereby starts charging the battery pack 2. After S18, the process of FIG. 29 is terminated.

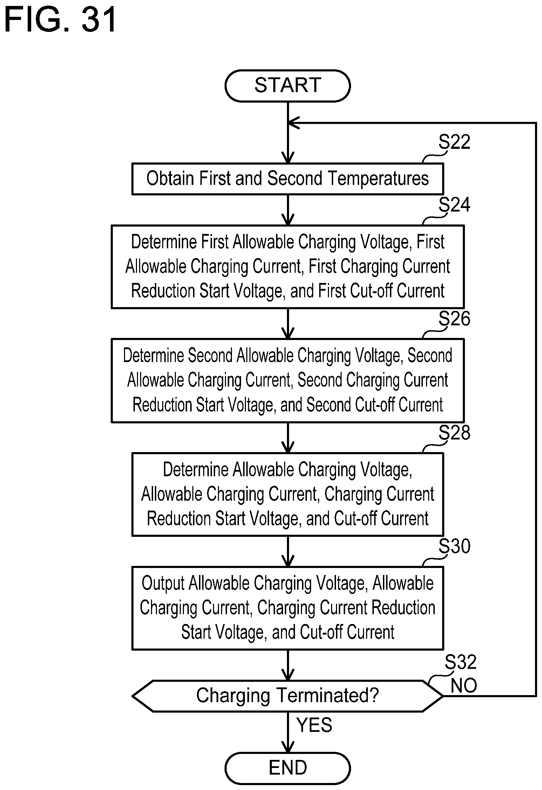

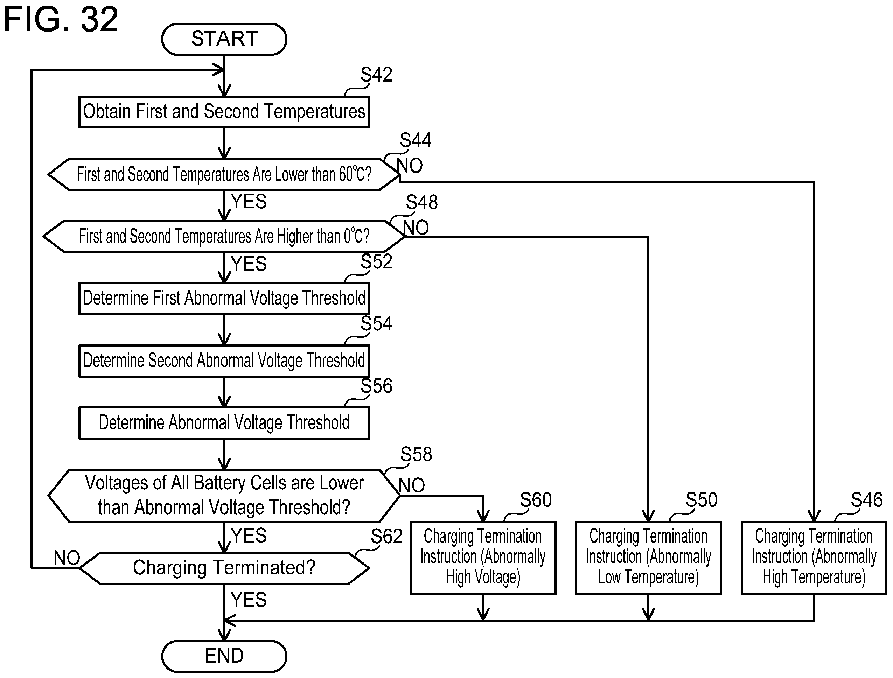

The control substrate 44 of the battery pack 2 simultaneously executes a charging parameter creation process shown in FIG. 31 and a charging abnormality determination process shown in FIG. 32, while the battery pack 2 is charged by the charger 400.

The charging parameter creation process shown in FIG. 31 will be described hereinbelow. In S22, the control substrate 44 obtains a temperature detected by the first thermistor 90 as a first temperature as well as a temperature detected by the second thermistor 92 as a second temperature.

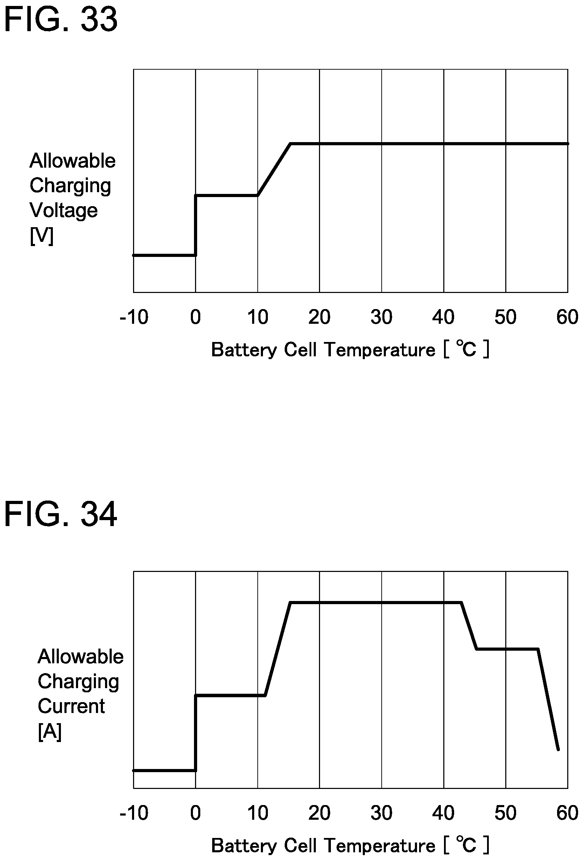

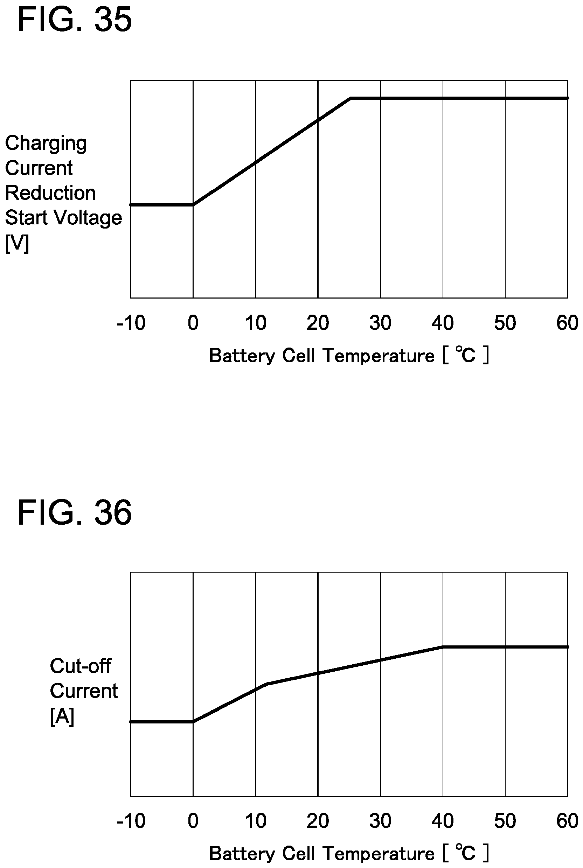

In S24, the control substrate 44 determines a first allowable charging voltage, a first allowable charging current, a first charging-current-reduction start voltage, and a first cut-off current. The control substrate 44 stores in advance a correspondence relationship between battery cell temperature and allowable charging voltage, which is shown in FIG. 33; a correspondence relationship between battery cell temperature and allowable charging current, which is shown in FIG. 34; a correspondence relationship between battery cell temperature and charging-current-reduction start voltage, which is shown in FIG. 35; and a correspondence relationship between battery cell temperature and cut-off current, which is shown in FIG. 36. In the correspondence relationship of FIG. 33, allowable charging voltages for low battery cell temperatures are set lower than an allowable charging voltage for an ordinary battery cell temperature, while allowable charging voltages for high battery cell temperatures are set equal to the allowable charging voltage for the ordinary battery cell temperature. In the correspondence relationship of FIG. 34, allowable charging currents for low battery cell temperatures are set lower than an allowable charging current for the ordinary battery cell temperature, while allowable charging currents for high battery cell temperatures are set lower than the allowable charging current for the ordinary battery cell temperature. In the correspondence relationship of FIG. 35, charging-current-reduction start voltages for low battery cell temperatures are set lower than a charging-current-reduction start voltage for the ordinary battery cell temperature, while charging-current-reduction start voltages for high battery cell temperatures are set equal to the charging-current-reduction start voltage for the ordinary battery cell temperature. In the correspondence relationship of FIG. 36, cut-off currents for low battery cell temperatures are set lower than a cut-off current for the ordinary battery cell temperature, while cut-off currents for high battery cell temperatures are set higher than the cut-off current for the ordinary battery cell temperature. The control substrate 44 determines the first allowable charging voltage, the first allowable charging current, the first charging-current-reduction start voltage, and the first cut-off current by using the first temperature and the correspondence relationships of FIGS. 33 to 36.

In S26, the control substrate 44 determines a second allowable charging voltage, a second allowable charging current, a second charging-current-reduction start voltage, and a second cut-off current. The control substrate 44 determines the second allowable charging voltage, the second allowable charging current, the second charging-current-reduction start voltage, and the second cut-off current by using the second temperature and the correspondence relationships of FIGS. 33 to 36.

In S28, the control substrate 44 determines an allowable charging voltage, an allowable charging current, a charging-current-reduction start voltage, and a cut-off current. In the present embodiment, the control substrate 44 determines lower one of the first and second allowable charging voltages as the allowable charging voltage. Similarly, the control substrate 44 determines lower one of the first and second allowable charging currents as the allowable charging current, determines lower one of the first and second charging-current-reduction start voltages as the charging-current-reduction start voltage, and determines lower one of the first and second cut-off currents as the cut-off current.

In S30, the control substrate 44 outputs the allowable charging voltage, the allowable charging current, the charging-current-reduction start voltage, and the cut-off current to the charger 400. The charger 400 chargers the battery pack 2 based on the allowable charging voltage, the allowable charging current, the charging-current-reduction start voltage, and the cut-off current that were outputted from the battery pack 2.

In S32, the control substrate 44 determines whether the charging by the charger 400 has been terminated. In a case where the charging has not been terminated yet (in case of NO), the process returns to S22. In a case where the charging has been terminated (in case of YES), the process of FIG. 31 is terminated.

The charging abnormality determination process shown in FIG. 32 will be described hereinbelow. In S42, the control substrate 44 obtains a temperature detected by the first thermistor 90 as a first temperature as well as a temperature detected by the second thermistor 92 as a second temperature.

In S44, the control substrate 44 determines whether both the first temperature and the second temperature are lower than a predetermined charging upper limit temperature (e.g.,60°C). In a case where at least one of the first temperature and the second temperature is equal to or higher than the charging upper limit temperature (in case of NO), the process proceeds to S46. In S46, the control substrate 44 sends a charging termination instruction due to abnormally high temperature to the charger 400, and the process of FIG. 32 is terminated. In a case where both the first temperature and the second temperature are lower than the charging upper limit temperature in S44 (in case of YES), the process proceeds to S48.

In S48, the control substrate 44 determines whether both the first temperature and the second temperature are higher than a predetermined charging lower limit temperature (e.g., 0°C). In a case where at least one of the first temperature and the second temperature is lower than the charging lower limit temperature (in case of NO), the process proceeds to S50. In S50, the control substrate 44 sends a charging termination instruction due to abnormally low temperature to the charger 400, and the process of FIG. 32 is terminated. In a case where both the first temperature and the second temperature are higher than the charging lower limit temperature in S48 (in case of YES), the process proceeds to S52.

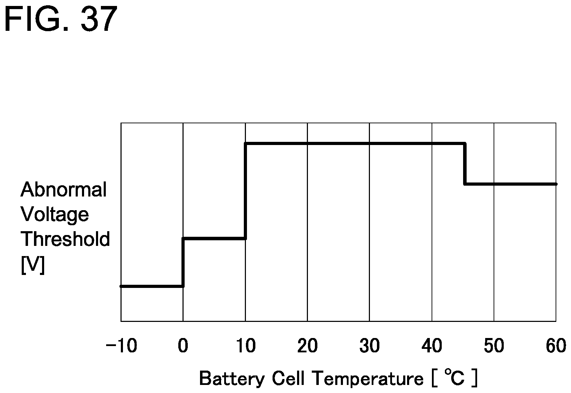

In S52, the control substrate 44 determines a first abnormal voltage threshold. The control substrate 44 stores in advance a correspondence relationship between battery cell temperature and abnormal voltage threshold, which is shown in FIG. 37. In the correspondence relationship of FIG. 37, abnormal voltage thresholds for low battery cell temperatures are set lower than an abnormal voltage threshold for the ordinary battery cell temperature, while abnormal voltage thresholds for high battery cell temperatures are set lower than the abnormal voltage threshold for the ordinary battery cell temperature. The control substrate 44 determines the first abnormal voltage threshold by using the first temperature and the correspondence relationship of FIG. 37.

In S54, the control substrate 44 determines a second abnormal voltage threshold. The control substrate 44 determines the second abnormal voltage threshold by using the second temperature and the correspondence relationship of FIG. 37.

In S56, the control substrate 44 determines an abnormal voltage threshold. In the present embodiment, the control substrate 44 determines lower one of the first and second abnormal voltage thresholds as the abnormal voltage threshold.

In S58, the control substrate 44 determines whether voltages of all the battery cells 40 are lower than the abnormal voltage threshold. In a case where at least one battery cell 40 has a voltage that is equal to or higher than the abnormal voltage threshold (in case of NO), the process proceeds to S60. In S60, the control substrate 44 sends a charging termination instruction due to abnormally high voltage to the charger 400, and the process of FIG. 32 is terminated. In a case where all the battery cells 40 have voltages that are lower than the abnormal voltage threshold in S58 (in case of YES), the process proceeds to S62.

In S62, the control substrate 44 determines whether the charging by the charger 400 has been terminated. In a case where the charging has not been terminated yet (in case of NO), the process returns to S42. In a case where the charging has been terminated (in case of YES), the process of FIG. 32 is terminated.

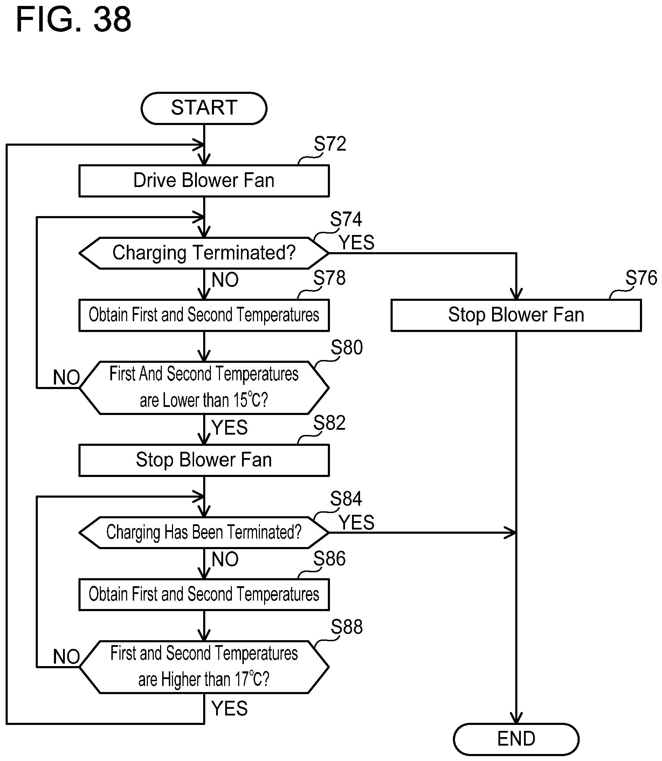

During the charging to the battery pack 2 by the charger 400, the control substrate 408 of the charger 400 obtains the temperature detected by the first thermistor 90 and the temperature detected by the second thermistor 92 from the battery pack 2, and controls operation of the blower fan 418. When the charger 400 starts charging the battery pack 2, the control substrate 408 executes a blow control process shown in FIG. 38.

In S72, the control substrate 408 drives the blower fan 418.

In S74, the control substrate 408 determines whether the charging to the battery pack 2 has been terminated. In a case where the charging has been terminated (in case of YES), the process proceeds to S76. In S76, the control substrate 408 stops the blower fan 418, and the process of FIG. 38 is terminated. In a case where the charging has not been terminated yet in S74 (in case of NO), the process proceeds to S78.

In S78, the control substrate 408 obtains a temperature detected by the first thermistor 90 as a first temperature as well as a temperature detected by the second thermistor 92 as a second temperature.

In S80, the control substrate 408 determines whether both the first temperature and the second temperature are lower than a predetermined blow stop temperature (e.g., 15°C). In a case where at least one of the first temperature and the second temperature is equal to or higher than the blow stop temperature (in case of NO), the process returns to S74. In case where both the first temperature and the second temperature are lower than the blow stop temperature (in case of YES), the process proceeds to S82.

In S82, the control substrate 408 stops the blower fan 418.

In S84, the control substrate 408 determines whether the charging to the battery pack 2 has been terminated. In a case where the charging has been terminated (in case of YES), the process of FIG. 38 is terminated. In a case where the charging has not been terminated yet (in case of NO), the process proceeds to S86.

In S86, the control substrate 408 obtains a temperature detected by the first thermistor 90 as a first temperature as well as a temperature detected by the second thermistor 92 as a second temperature.

In S88, the control substrate 408 determines whether both the first temperature and the second temperature are higher than a predetermined blow start temperature (e.g., 17°C). In a case where at least one of the first temperature and the second temperature is equal to or lower than the blow start temperature (in case of NO), the process returns to S84. In a case where both the first temperature and the second temperature are higher than the blow start temperature (in case of YES), the process returns to S72.

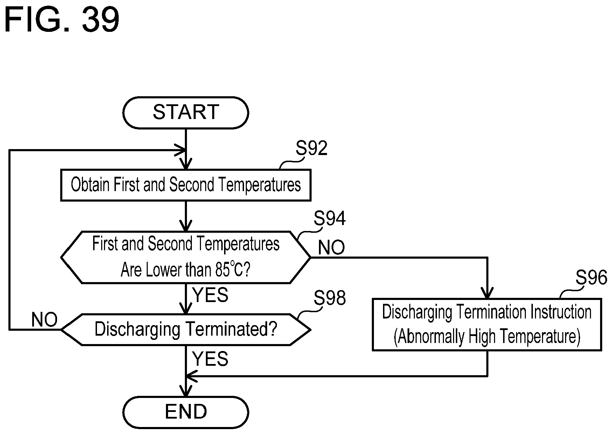

A process executed by the control substrate 44 in connection with discharge of the battery pack 2 will be described hereinbelow. The control substrate 44 of the battery pack 2 executes a discharge-abnormality determination process shown in FIG. 39 while the battery pack 2 is attached to the battery pack mount 202 of the electrical machine 200 and discharges to the electrical machine 200.

In S92, the control substrate 44 obtains a temperature detected by the first thermistor 90 as a first temperature as well as a temperature detected by the second thermistor 92 as a second temperature.

In S94, the control substrate 44 determines whether both the first temperature and the second temperature are lower than a predetermined discharging upper limit temperature (e.g., 85°C). In a case where at least one of the first temperature and the second temperature is equal to or higher than the discharging upper limit temperature (in case of NO), the process proceeds to S96. In S96, the control substrate 44 sends a discharging termination instruction due to abnormally high temperature to the electrical machine 200, and the process of FIG. 39 is terminated. In a case where both the first temperature and the second temperature are lower than the discharging upper limit temperature in S94 (in case of YES), the process proceeds to S98.

In S98, the control substrate 44 determines whether the discharging to the electrical machine 200 has been terminated. In a case where the discharging has not been terminated yet (in case of NO), the process returns to S92. In a case where the discharging has been terminated (in case of YES), the process of FIG. 39 is terminated.

In the above-described embodiment, the side plates 208a of the protective rib 208 of the electrical machine 200 may be disposed only on both sides of each power terminal 204 and may not be disposed on both sides of each signal terminal 206. Corresponding to this, the recessed grooves 76 of the battery pack 2 may be provided only on both sides of each power terminal 60 and may not be provided on both sides of each signal terminal 62.

In the above-described embodiment, the power terminals 60 of the battery pack 2 are disposed such that they interpose the signal terminals 62 therebetween from both sides in the right-left direction. However, another arrangement may be employed for the power terminals 60 and the signal terminals 62. Corresponding to this, the arrangement for the power terminals 204 and the signal terminals 206 of the electrical machine 200 and the arrangement for the power terminals 410 and the signal terminals 412 of the charger 400 may be different from the arrangements described in the embodiment, as long as these arrangements correspond to the arrangement for the power terminals 60 and the signal terminals 62 of the battery pack 2.

In the above-described embodiment, the power terminals 60 and the signal terminals 62 of the battery pack 2 are installed on the control substrate 44. However, the power terminals 60 and the signal terminals 62 may be installed on another terminal substrate (not shown) that is separated from the control substrate 44 and is electrically connected to the control substrate 44.

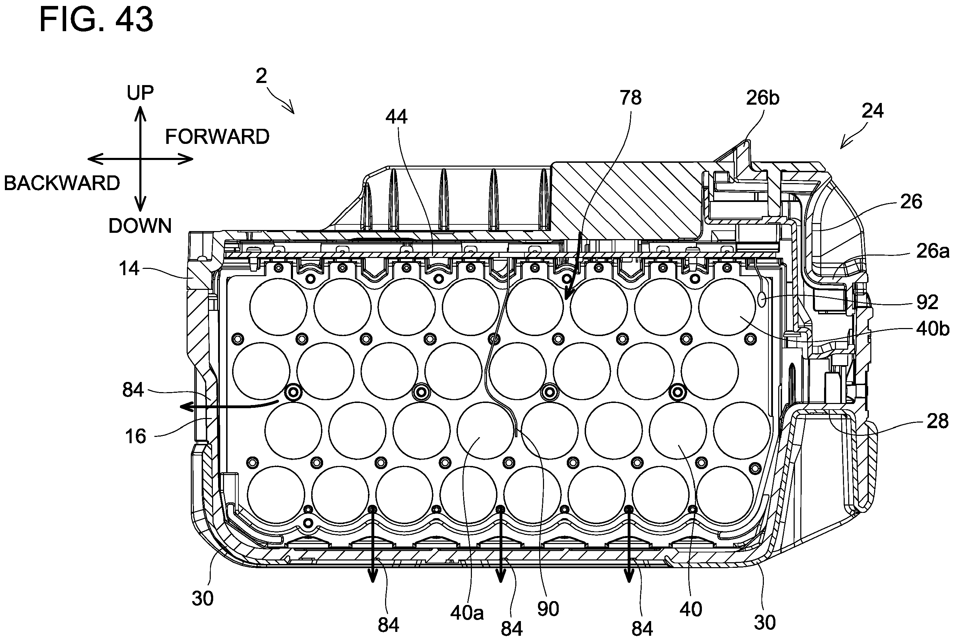

In the above-described embodiment, the blower fan 418 of the charger 400 is configured to take in air from the battery pack mounts 404. Unlike this, the blower fans 418 may be configured to discharge air toward the battery pack mounts 404. In this case, as shown in FIG. 43, the vent holes 78 of the battery pack 2 function as air supply holes through which air is introduced from the outside into the battery pack 2, and the air supply holes 84 of the battery pack 2 functions as air discharge holes through which air is discharged from the inside of the battery pack 2 to the outside. In the example shown in FIG. 43, the hook mount 24 of the upper case 14 does not function as the air supply hole 84 because the clearance between the hook 26 and the upper case 14 is closed such that air cannot flow therethrough. In this case, air that has entered the battery pack 2 through the vent holes 78 flows through the slits 80 of the control substrate 44, then flows through the openings 82 of the cell holder 42, and flows into the spaces between the battery cells 40. The air, which has entered the spaces between the battery cells 40, cools the battery cells 40 and then flows out to the outside of the battery pack 2 through air supply holes 84. In the example shown in FIG. 43, the first thermistor 90 is disposed at a position where a distance from the position to the air supply holes 84 through which air flows out to the outside from the inside of the battery pack 2 is shorter than a distance from the position to the vent holes 78 through which air flows into the battery pack 2 from the outside, while the second thermistor 92 is disposed at a position where a distance from the position to the vent holes 78 through which air flows into the battery pack 2 from the outside is shorter than a distance from the position to the air supply holes 84 through which air flows out to the outside from the inside of the battery pack 2. In the example of FIG. 43 as well, the battery cell 40a whose temperature is detected by the first thermistor 90 has the highest temperature during charging among the battery cells 40, and the battery cell 40b whose temperature is detected by the second thermistor 92 has the lowest temperature during charging among the battery cells 40. As such, by using the first thermistor 90 and the second thermistor 92, a temperature of the battery cell 40a, which is the highest among the battery cells 40 during charging to the battery pack 2, and a temperature of the battery cell 40b, which is the lowest among the battery cells 40 during the charging, can be obtained.

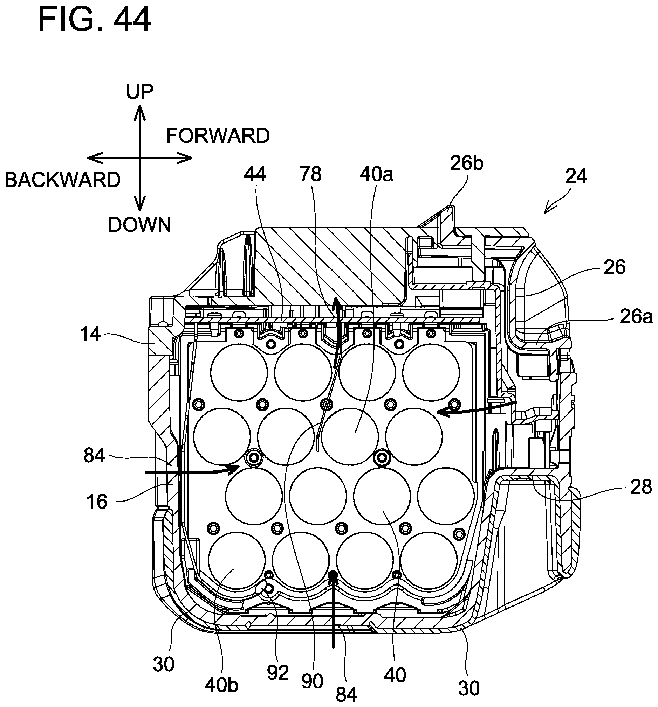

The above-described embodiment describes an example where the battery pack 2 includes thirty-two battery cells 40, the nominal voltage of the battery pack 2 is 64 V, and the nominal capacity of the battery pack 2 is 5 Ah. Unlike this, the battery pack 2 may include sixteen battery cells 40, the nominal voltage of the battery pack 2 may be 64 V, and the nominal capacity of the battery pack 2 may be 2.5 Ah. In this case, as shown in FIG. 44, the battery cells 40 are arranged in four rows in the up-down direction with four battery cells in each row in the front-rear direction. In a case where the first thermistor 90 and the second thermistor 92 are disposed as shown in FIG. 44, the battery cell 40a whose temperature is detected by the first thermistor 90 has the highest temperature during charging among the battery cells 40, and the battery cell 40b whose temperature is detected by the second thermistor 92 has the lowest temperature during charging among the battery cells 40. As such, by using the first thermistor 90 and the second thermistor 92, a temperature of the battery cell 40a, which is the highest among the battery cells 40 during charging to the battery pack 2, and a temperature of the battery cell 40b, which is the lowest among the battery cells 40 during the charging, can be obtained.

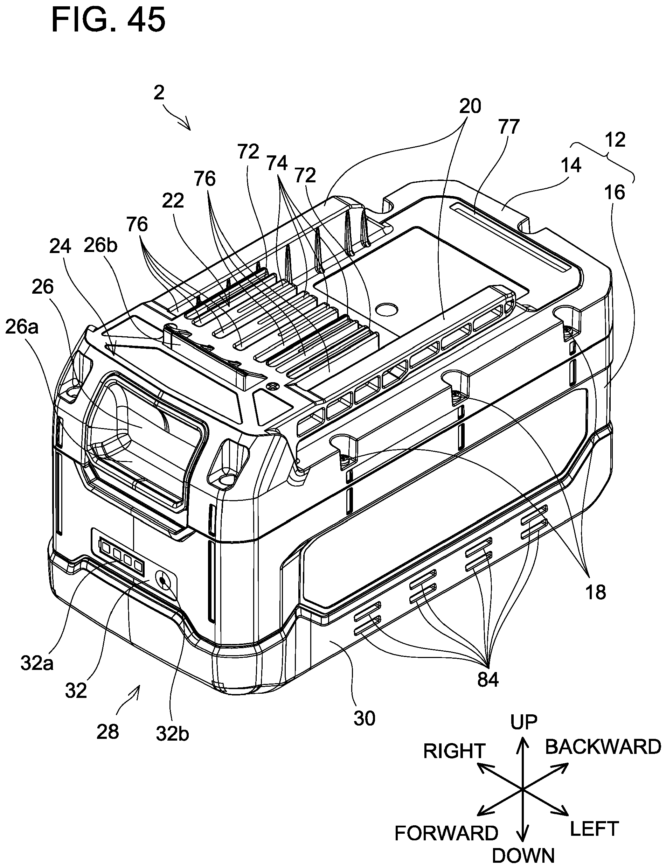

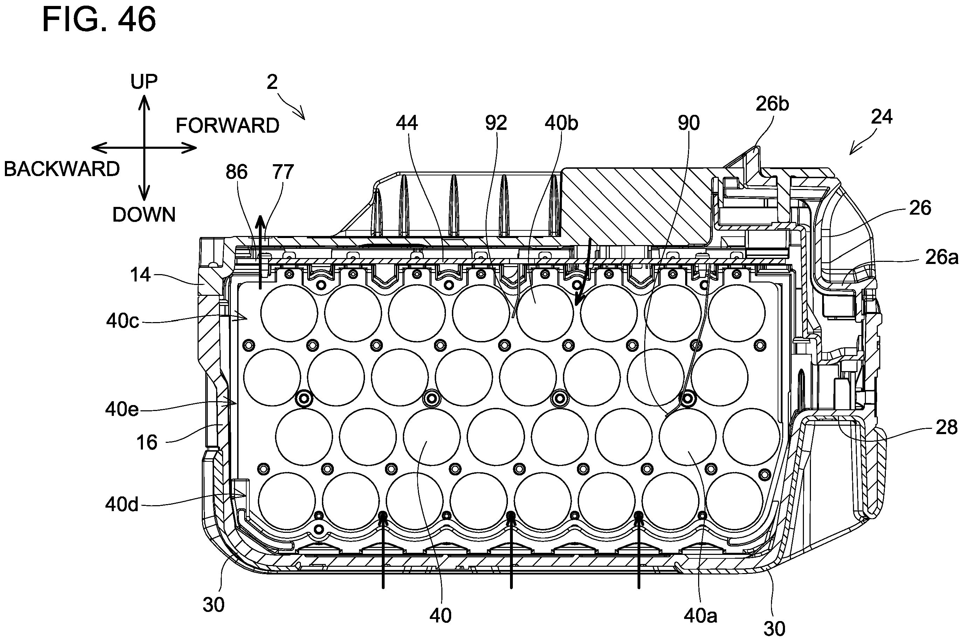

The battery pack 2 may be configured as shown in FIGS. 45 and 46. In the battery pack 2 according to this variant, the air supply holes 84 are formed in lower portions of right and left surfaces of the lower case 16 and the lower surface of the lower case 16, and are not formed in any other places. Further, in the battery pack 2 according to the present variant, the vent holes 78, 79 are not formed in the upper case 14, but instead a vent hole 77 is formed in a rear portion of the upper surface of the upper case 14. As shown in FIG. 46, in the battery pack 2 according to the present variant, a notch 86 is formed at a rear end of the control substrate 44. The notch 86 is disposed to face the vent hole 77 of the upper case 14. Further, an air supply passage communicating with the blower fan 418 is provided in the charger 400 corresponding to the battery pack 2 according to the present variant, although this is not shown. The air supply passage is disposed to face the vent hole 77 when the battery pack 2 is attached. When the blower fan 418 of the charger 400 is driven with the battery pack 2 attached to the charger 400, air is suctioned from the inside of the case 12 of the battery pack 2, through the vent hole 77, to the air supply passage of the charger 400. In this way, in the battery pack 2, air flows into the inside from the outside through the air supply holes 84, the power terminal openings 72, and the signal terminal openings 74. The air having flowed into the inside of the battery pack 2 flows through spaces between the battery cells 40, the notch 86 of the control substrate 44, and the vent hole 77 of the upper case 14, and then flows out to the outside of the battery pack 2. During this, the plurality of battery calls 40 is cooled by the air flowing therearound.

As shown in FIG. 46, in the battery pack 2 according to the present variant, the first thermistor 90 and the second thermistor 92 are both film type thermistors. The first thermistor 90 is disposed in a middle row of the plurality of battery calls 40 and detects the temperature of the battery cell 40a disposed at a position far from the vent hole 77. The second thermistor 92 is disposed in the upper row of the plurality of battery cells 40 and detects the temperature of the battery cell 40b disposed near the center in the front-rear direction. That is, in the present variant, the battery cell 40a is included in the middle battery cell group 40e, and the battery cell 40b is included in the upper battery cell group 40c. The first thermistor 90 is disposed near the center of the battery cell 40a with respect to the right-left direction. The second thermistor 92 is disposed near an end of the battery cell 40b with respect to the right-left direction.

In the battery pack 2 according to the present variant, the battery cell 40a is less likely to release its heat since it is surrounded by other battery cells 40. Further, the battery cell 40a is less likely to be cooled since the air does not flow much around the battery cell 40a when the blower fan 418 of the charger 400 is driven. Therefore, the battery cell 40a is likely to have a high temperature during charging. To the contrary, the battery cell 40b is likely to release its heat since it is not surrounded by other battery cells 40. Further, the battery cell 40b is likely to be cooled since the air that has flowed in from the power terminal openings 72 and the signal terminal openings 74 of the upper case 14 and passed through the slits 80 of the control substrate 44 flows near the battery cell 40b when the blower fan 418 of the charger 400 is driven. Therefore, the battery cell 40b is likely to have a low temperature during charging. The configuration of the present variant also enables the first thermistor 90 to obtain the temperature of the battery cell 40 having a high temperature during charging and enables the second thermistor 92 to obtain the temperature of the battery cell 40b having a low temperature during charging.

As described above, in one or more embodiments, the battery pack 2 includes the plurality of battery cells 40, the cell holder 42 holding the plurality of battery cells 40, and the case 12 accommodating the cell holder 42 therein. The case 12 includes the lower case 16 (an example of first case) and the upper case 14 (an example of second case) fixed to the lower case 16. The cell holder 42 is fixed to the lower case 16 by the screws 70 (an example of fastener). The screws 70 are shielded from the outside of the case 12 in a state where the lower case 16 is fixed to the upper case 14.

According to the above configuration, the screws 70 fixing the cell holder 42 to the lower case 16 are shielded from the outside of the case 12, thus an influence of static electricity or the like outside the case 12 is not exerted onto the inside of the case 12 through the screws 70. In the battery pack 2 which includes the case 12 accommodating the cell holder 42 holding the plurality of battery cells 40, an influence of static electricity or the like outside the case 12 can be suppressed from being exerted onto the inside of the case 12.

In one or more embodiments, the battery pack 2 further comprises the cushion material 68 interposed between the lower case 16 and the cell holder 42.

According to the above configuration, vibration and/or impact can be suppressed from transferring to the cell holder 42 from the case 12.

In one or more embodiments, the lower case 16 has a box shape having its upper surface (an example of one side thereof) opened. The cell holder 42 is fixed to the lower case 16 by the screws 70 in a state where the cell holder 42 is placed on the inner bottom surface of the lower case 16. The screws 70 are fastened at positions that are farther apart from the inner bottom surface of the lower case 16 than the center of the cell holder 42 with respect to a direction orthogonal to the inner bottom surface of the lower case 16, namely with respect to the up-down direction.

According to the above configuration, the cell holder 42 which holds the plurality of battery cells 40 can be suppressed from swaying against the case 12.

In one or more embodiments, each of the plurality of battery cells 40 has the substantially cylindrical shape having the longitudinal direction in the right-left direction (an example of first direction). The plurality of battery cells 40 is held by the cell holder 42 in a state where the battery cells 40 are arranged side by side in the front-rear direction (an example of second direction orthogonal to the first direction). The screws 70 are fastened at positions that are on an inner side relative to both ends of the plurality of battery cells 40 with respect to the right-left direction and are on an outer side relative to the outermost battery cell 40 among the plurality of battery cells 40 with respect to the front-rear direction.

In the case where each of the plurality of battery cells 40 has the substantially cylindrical shape having its longitudinal direction in the right-left direction and the plurality of battery cells 40 is held by the cell holder 42 in the state where the battery cells 40 are arranged side by side in the front-rear direction, components, such as the lead plates 54, 56, connected to the electrodes of the battery cells 40 are provided on both sides of the battery cells 40 in the right-left direction. Therefore, if the screws 70 are fastened at positions that are on an outer side relative to both ends of the plurality of battery cells 40 with respect to the right-left direction and are on an inner side relative to the outermost battery cell 40 among the plurality of battery cells 40 with respect to the front-rear direction, it is required to avoid interference between the screws 70 and the components near the both ends of the battery cells 40 in the right-left direction, which results in increase in size of the battery pack 2. Meanwhile, as described above, according to the configuration where the screws 70 are fastened at positions that are on the inner side relative to both ends of the plurality of battery cells 40 with respect to the right-left direction and are on the outer sides relative to the outermost battery cells 40 among the plurality of battery cells 40 with respect to the front-rear direction, the cell holder 42 can be fixed to the lower case 16 by the screws 70 without increase in size of the battery pack 2.

In one or more embodiments, the battery pack 2 further comprises the control substrate 44 accommodated in the case 12 and electrically connected to the plurality of battery cells 40. The control substrate 44 is fixed to the cell holder 42.

According to the above configuration, in manufacturing the battery pack 2, the control substrate 44 and the cell holder 42 can be attached to the lower case 16 in an integrated manner where the control substrate 44 is fixed to the cell holder 42. Labors related to manufacture of the battery pack 2 can be reduced.

In one or more embodiments, in a plan view in a direction orthogonal to the control substrate 44, namely from above, the screws 70 are fastened at positions on an outer side relative to the control substrate 44.

According to the above configuration, when the cell holder 42 with the control substrate 44 is fixed thereto is attached to the lower case 16, fastening work for the screws 70 can be performed without interference with the control substrate 44. Labors related to the manufacture of the battery pack 2 can be reduced.

In one or more embodiments, the battery pack 2 comprises the battery cell 40, the control substrate 44 (an example of substrate) including the power terminal 60 and the signal terminal 62 (an example of a plurality of terminals), and the case 12 accommodating the battery cell 40 and the control substrate 44 therein. The control substrate 44 includes the slit 80 (an example of through hole) disposed between the power terminal 60 and the signal terminal 62. The case 12 includes the vent hole 78 disposed at a position facing the slit 80 of the control substrate 44.

According to the above configuration, the vent hole 78 provided in the case 12 is disposed at a position facing the slit 80 provided in the control substrate 44, therefore air flowing in or flowing out through the vent hole 78 of the case 12 passes through the slit 80 of the control substrate 44. As such, even when the battery cell 40 and the control substrate 44 are disposed close to each other within the case 12, sufficient air can flow through between the battery cell 40 and the control substrate 44 and thus the battery cell 40 located close to the control substrate 44 can be sufficiently cooled. Further, according to the above configuration, the slit 80 provided in the control substrate 44 is disposed between the power terminal 60 and the signal terminal 62. Therefore, even if a conductive substance, such as water, enters inside of the case 12 and adheres to the control substrate 44, short circuit can be suppressed from occurring between the power terminal 60 and the signal terminal 62.

In one or more embodiments, the power terminal 60 and the signal terminal 62 include a first terminal (e.g., the power terminal 60) and a second terminal (e.g., the signal terminal 62 adjacent to the power terminal 60). The vent hole 78 includes a plurality of holes 78a disposed between a region of the upper case 14 facing the first terminal (e.g., the power terminal 60) and a region of the upper case 14 facing the second terminal (e.g., the signal terminal 62 adjacent to the power terminal 60).

If a size of the vent hole 78 provided in the case 12 is large, an amount of air passing through the vent hole 78 is increased, however, foreign matter may easily enter inside of the battery pack 2 through the vent hole 78. According to the above configuration, the vent hole 78 includes the plurality of holes 78a, therefore a size of individual holes 78a can be reduced without reduction in air amount passing through the vent hole 78, and foreign matter can be suppressed from entering inside of the battery pack 2 through the vent hole 78.

In one or more embodiments, the battery pack 2 further comprises the cell holder 42 accommodated in the case 12 and holding the battery cell 40. The cell holder 42 includes an opening 82 disposed at a position facing the slit 80 of the control substrate 44.

In the configuration where the battery cell 40 is held by the cell holder 42, if the cell holder 42 shields a space between the slit 80 of the control substrate 44 and the battery cell 40, air passing through the slit 80 flows in the space between the control substrate 44 and the cell holder 42, which results in insufficient cooling for the battery cell 40 close to the slit 80. According to the above configuration, the cell holder 42 includes the opening 82 disposed at a position facing the slit 80 of the control substrate 44, therefore air passing through the slit 80 flows through the opening 82 of the cell holder 42. As such, the battery cell 40 close to the slit 80 can be sufficiently cooled.

In one or more embodiment, the case 12 includes the recessed groove 76 disposed between the power terminal 60 and the signal terminal 62 and opened in two directions. The vent hole 78 is disposed in a bottom surface of the recessed groove 76.

According to the above configuration, an inner space of the recessed groove 76 of the case 12 functions as a flow passage for air passing through the vent hole 78. Further, according to the above configuration, either of the two directions in which the recessed groove 76 is opened can be used as a direction in which air passing through the vent hole 78 flows into the case 12 or as a direction the air flows out from the case 12, as desired. The above configuration can improve a degree of freedom in designing a mechanism through which cooling air flows into the battery pack 2 or flows out therefrom.

In one or more embodiments, the battery pack 2 further comprises at least one lead plate 54, 56 connecting the battery cell 40 to the control substrate 44. The control substrate 44 further includes the slit 85 (an example of second through hole) disposed between the power terminal 60 and the at least one lead plate 54, 56. The case 12 further includes the vent hole 83 (an example of second vent hole) disposed at a position facing the slit 85 of the control substrate 44.

According to the above configuration, the vent hole 83 provided in the case 12 is disposed at a position facing the slit 85 of the control substrate 44, therefore air flowing into the case 12 or flowing out therefrom through the vent hole 83 passes through the slit 85 of the control substrate 44. As such, even when the battery cell 40 and the control substrate 44 are disposed close to each other with in the case 12, sufficient air can flow between the battery cell 40 and the control substrate 44, and the battery cell 40 close to the control substrate 44 can be sufficiently cooled. Further, according to the above configuration, the slit 85 provided in the control substrate 44 is disposed between the power terminal 60 and the at least one lead plate 54, 56. Therefore, even if a conductive substance, such as water, enters inside of the case 12 and adheres to the control substrate 44, short circuit can be suppressed from occurring between the power terminal 60 and the at least one lead plate 54, 56.

In one or more embodiments, the control substrate 44 includes a notch 44a (or a notch 44b) provided between adjacent lead plates 54 (or lead plates 56).

According to the above configuration, air can also flow through the notch 44a (or the notch 44b) of the control substrate 44, therefore sufficient air can flow through between the battery cell 40 and the control substrate 44, and the battery cell 40 close to the control substrate 44 can be sufficiently cooled. Further, according to the above configuration, the notch 44a (or the notch 44b) provided in the control substrate 44 is disposed between the adjacent lead plates 54 (or lead plates 56). Therefore, even if a conductive substance, such as water, enters inside of the case 12 and adheres to the control substrate 44, short circuit can be suppressed from occurring between the adjacent lead plates 54 (or lead plates 56).

In one or more embodiments, the battery pack 2 is configured to be detachably attached to the charger 400 by sliding the battery pack 2 in the front-rear direction (an example of predetermined sliding direction). The control substrate 44 further includes the slit 81 (an example of third through hole) disposed at a position offset from the signal terminal 62 in the rear direction. The case 12 further includes the vent hole 79 (an example of third vent hole) disposed at a position facing the slit 81 of the control substrate 44.

According to the above configuration, the vent hole 79 provided in the case 12 is disposed at a position facing the slit 81 provided in the control substrate 44, therefore air flowing in or flowing out through the vent hole 79 of the case 12 passes through the slit 81 of the control substrate 44. As such, even when the battery cell 40 and the control substrate 44 are disposed close to each other within the case 12, sufficient air can flow through between the battery cell 40 and the control substrate 44, and the battery cell 40 close to the control substrate 44 can be sufficiently cooled.

In one or more embodiments, the battery pack 2 comprises: the plurality of battery cells 40 including the battery cell 40a (an example of the first battery cell) and the battery cell 40b (an example of the second battery cell); the first thermistor 90 disposed closest to the battery cell 40a among the plurality of battery cells 40; the second thermistor 92 disposed closest to the battery cell 40b among the plurality of battery cells 40; and the case 12 accommodating the plurality of battery cells 40, the first thermistor 90, and the second thermistor 92. The battery cell 40a is disposed at a position where another battery cell 40 is interposed between the battery cell 40a and the wall surface of the case 12 with respect to the direction orthogonal to the longitudinal direction of the battery cell 40a. The battery cell 40b is disposed at a position where no other battery cell 40 is interposed between the battery cell 40b and the wall surface of the case 12 with respect to the direction orthogonal to the longitudinal direction of the battery cell 40b.

Generally, in the battery pack 2 in which the case 12 accommodates the plurality of battery cells 40 therein, heat is released from the outer surface of the case 12 to air outside of the case 12. Since another battery cell 40 is interposed between the battery cell 40a and the wall surface of the case 12 in the above-described configuration, the heat is less likely to be released via the wall surface of the case 12, and thus the battery cell 40a is likely to have a high temperature. Further, since no other battery cell 40 is interposed between the battery cell 40b and the wall surface of the case 12, the heat is likely to be released via the wall surface of the case 12, and thus the battery cell 40b is likely to have a low temperature. The above-described configuration enables the first thermistor 90 to obtain the temperature of the battery cell 40a which is likely to have a high temperature and enables the second thermistor 92 to obtain the temperature of the battery cell 40b which is likely to have a low temperature. The above-described configuration enables the temperature of the battery cell 40a having a high temperature as well as the temperature of the battery cell 40b having a low temperature to be obtained in the battery pack 2 comprising the plurality of battery cells 40.

In one or more embodiments, the case 12 includes the air supply holes 84 (an example of air supply hole) through which air is introduced and the vent holes 78 (an example of air discharge hole) through which air is discharged.

According to the above configuration, in the battery pack 2 where the plurality of battery cells 40 is cooled by air flowing inside the case 12 from the air supply holes 84 to the vent holes 78, the temperature of the battery cell 40a having a high temperature as well as the temperature of the battery cell 40b having a low temperature can be obtained.

In one or more embodiments, the second thermistor 92 is disposed at a position where a distance from the position to the air supply holes 84 is smaller than a distance from the position to the vent holes 78.

In the battery pack 2 where the plurality of battery cells 40 is cooled by air flowing inside the case 12 from the air supply holes 84 to the vent holes 78, the air has the lowest temperature immediately after having flowed in through the air supply holes 84 and has the highest temperature immediately before flowing out through the vent holes 78. Therefore, the battery cell(s) 40 disposed near the air supply holes 84 tend to have a low temperature, while the battery cell(s) 40 disposed near the vent holes 78 tend to have a high temperature. According to the above configuration, the second thermistor 92 can obtain the temperature of the battery cell 40b having a lower temperature.

In one or more embodiments, the first thermistor 90 is disposed at a position where a distance from the position to the vent holes 78 is smaller than a distance from the position to the air supply holes 84.

In the battery pack 2 where the plurality of battery cells 40 is cooled by air flowing inside the case 12 from the air supply holes 84 to the vent holes 78, the battery cell(s) 40 disposed near the air supply holes 84 tend to have a low temperature, while the battery cell(s) 40 disposed near the vent holes 78 tend to have a high temperature. According to the above configuration, the first thermistor 90 can obtain the temperature of the battery cell 40a having a higher temperature.

In one or more embodiments, the battery pack 2 further comprises the control substrate 44 (an example of substrate) accommodated in the case 12 and disposed between the vent holes 78 and the plurality of battery cells 40. Each of the first thermistor 90 and the second thermistor 92 is connected to the control substrate 44. The first thermistor 90 includes a film type thermistor. The second thermistor 92 includes a dip type thermistor.

According to the above configuration, the control substrate 44 is disposed between the vent holes 78 and the plurality of battery cells 40, therefore the temperature of the battery cell 40a having a high temperature can be obtained with high accuracy by obtaining the temperature of the battery cell 40a disposed near the vent holes 78, namely the temperature of the battery cell 40a which tends to have a high temperature, by the first thermistor 90 including the film type thermistor. Further, according to the above configuration, even when the control substrate 44 is disposed between the vent holes 78 and the plurality of battery cells 40, the temperature of the battery cell 40b disposed near the air supply holes 84, namely the temperature of the battery cell 40b which tends to have a low temperature, can be obtained by the second thermistor 92 including the dip type thermistor.

In one or more embodiments, the battery pack 2 comprises: the plurality of battery cells 40 including the battery cell 40a (an example of the first battery cell) and the battery cell 40b (an example of the second battery cell); the first thermistor 90 disposed closest to the battery cell 40a among the plurality of battery cells 40; the second thermistor 92 disposed closest to the battery cell 40b among the plurality of battery cells 40; and the case 12 accommodating the plurality of battery cells 40, the first thermistor 90, and the second thermistor 92. The plurality of battery cells 40 includes: the upper battery cell group 40c disposed in the upper row; the lower battery cell group 40d disposed in the lower row; and the middle battery cell group 40e disposed between the upper battery cell group 40c and the lower battery cell group 40d. The battery cell 40a is included in the middle battery cell group 40e. The battery cell 40b is included in either the upper battery cell group 40c or the lower battery cell group 40d.

Since other battery cells 40 are interposed between the battery cell 40a and the upper and lower surfaces of the case 12 in the above-described configuration, the heat is less likely to be released via the upper and lower surfaces of the case 12, and thus the battery cell 40a is likely to have a high temperature. Further, since no other battery cell 40 is interposed between the battery cell 40b and the upper or lower surface of the case 12, the heat is likely to be released via the upper or lower surface of the case 12, and thus the battery cell 40b is likely to have a low temperature. The above-described configuration enables the first thermistor 90 to obtain the temperature of the battery cell 40a having a high temperature and also enables the second thermistor 92 to obtain the temperature of the battery cell 40b having a low temperature. The above-described configuration enables the temperature of the battery cell 40a having a high temperature as well as the temperature of the battery cell 40b having a low temperature to be obtained in the battery pack 2 comprising the plurality of battery cells 40.

In one or more embodiments, the battery pack 2 comprises: the plurality of battery cells 40 including the battery cell 40a (an example of the first battery cell) and the battery cell 40b (an example of the second battery cell); the first thermistor 90 disposed closest to the battery cell 40a among the plurality of battery cells 40; the second thermistor 92 disposed closest to the battery cell 40b among the plurality of battery cells 40; and the case 12 accommodating the plurality of battery cells 40, the first thermistor 90 and the second thermistor 92. The plurality of battery cells 40 includes: the upper battery cell group 40c disposed at a position facing the upper surface of the case 12; the lower battery cell group 40d disposed at a position facing the lower surface of the case 12; and the middle battery cell group 40e disposed between the upper battery cell group 40c and the lower battery cell group 40d. The battery cell 40a is included in the middle battery cell group 40e. The battery cell 40b is included in either the upper battery cell group 40c or the lower battery cell group 40d.

Since other battery cells 40 are interposed between the battery cell 40a and the upper and lower surfaces of the case 12 in the above-described configuration, the heat is less likely to be released via the upper and lower surfaces of the case 12, and thus the battery cell 40a is likely to have a high temperature. Further, since no other battery cell 40 is interposed between the battery cell 40b and the upper or lower surface of the case 12, the heat is likely to be released via the upper or lower surface of the case 12, and thus the battery cell 40b is likely to have a low temperature. The above-described configuration enables the first thermistor 90 to obtain the temperature of the battery cell 40a having a high temperature and also enables the second thermistor 92 to obtain the temperature of the battery cell 40b having a low temperature. The above-described configuration enables the temperature of the battery cell 40a having a high temperature as well as the temperature of the battery cell 40b having a low temperature to be obtained in the battery pack 2 comprising the plurality of battery cells 40.

In one or more embodiments, the power supply system 600 comprises the electrical machine 200 and the battery pack 2 configured to be detachably attached to the electrical machine 200 by being slid in the front-rear direction (an example of sliding direction) with respect to the electrical machine 200. The electrical machine 200 includes the power terminals 204 (an example of machine-side power terminal) and the protective ribs 208 disposed on both sides of each power terminal 204 and extending beyond the power terminals 204. The battery pack 2 includes the power terminals 60 (an example of battery-side power terminal) configured to mechanically engage with and electrically connect to the power terminals 204, and the case 12 accommodating the power terminals 60. The case 12 includes the power terminal openings 72 disposed at positions facing the power terminals 60 in the front-rear direction, and the recessed grooves 76 disposed on both sides of each power terminal 60 and extending along the front-rear direction.

In one or more embodiments, the electrical machine 200 is configured to have the battery pack 2 detachably attached thereto by the battery pack 2 being slid in the front-rear direction (an example of sliding direction). The electrical machine 200 comprises the power terminals 204 (an example of machine-side power terminal) and the protective ribs 208 disposed on both sides of each power terminal 204 and extending beyond the power terminals 204.

In one or more embodiments, the battery pack 2 is configured to be detachably attached to the electrical machine 200 by being slid with respect to the electrical machine 200 in the front-rear direction (an example of sliding direction). The battery pack 2 comprises the power terminals 60 (an example of battery-side power terminal) and the case 12 accommodating the power terminals 60. The case 12 includes the power terminal openings 72 disposed at positions facing the power terminals 60 in the front-rear direction, and the recessed grooves 76 disposed on both sides of each power terminal 60 and extending along the front-rear direction.

According to the above configuration, the protective ribs 208, which extend beyond the power terminals 204, are provided on both sides of each power terminal 204 of the electrical machine 200, therefore the user can be prevented from accidentally touching the power terminals 204 even in the state where the battery pack 2 is detached from the electrical machine 200. According to the above configuration, the recessed grooves 76 of the case 12 of the battery pack 2 receive the protective ribs 208 of the electrical machine 200 upon attachment of the battery pack 2 to the electrical machine 200, which allows the battery pack 2 to be attached to the electrical machine 200 without interference between the protective ribs 208 and the case 12.

In one or more embodiments, the electrical machine 200 further comprises the signal terminals 206 (an example of machine-side signal terminal). The protective ribs 208 are also disposed on both sides of each signal terminal 206 and extend beyond the signal terminals 206. The battery pack 2 further comprises the signal terminals 62 (an example of battery-side signal terminal) which are accommodated in the case 12 and are configured to mechanically engage with and electrically connected to the signal terminals 206. The case 12 further includes the signal terminal openings 74 disposed at positions facing the signal terminals 62 in the front-rear direction. The recessed grooves 76 are also disposed on both sides of each signal terminal 62.

In one or more embodiments, the electrical machine 200 further comprises the signal terminals 206 (an example of machine-side signal terminal). The protective ribs 208 are also disposed on both sides of each signal terminal 206 and extend beyond the signal terminals 206.

In one or more embodiments, the battery pack 2 further comprises the signal terminals 62 (an example of battery-side signal terminal) accommodated in the case 12. The case 12 further includes the signal terminal openings 74 disposed at positions facing the signal terminals 62 in the front-rear direction. The recessed grooves 76 are also disposed on both sides of each signal terminal 62.

According to the above configuration, the protective ribs 208, which extend beyond the signal terminals 206, are provided on both sides of each signal terminal 206 of the electrical machine 200, therefore the user can be prevented from accidentally touching the signal terminals 206 even in the state where the battery pack 2 is detached from the electrical machine 200. According to the above configuration, the recessed grooves 76 of the case 12 of the battery pack 2 receive the protective ribs 208 of the electrical machine 200 upon attachment of the battery pack 2 to the electrical machine 200, which allows the battery pack 2 to be attached to the electrical machine 200 without interference between the protective ribs 208 and the case 12.

In one or more embodiments, the electrical machine 200 further comprises the slide rails 210 (an example of machine-side slide rail). At least one of the protective ribs 208 is disposed between the slide rail 210 and the power terminal 204. The battery pack 2 further comprises the slide rails 20 (an example of battery-side slide rail) configured to slidably engage with the slide rails 210 in the front-rear direction. At least one of the recessed grooves 76 is disposed between the slide rail 20 and the power terminal 60.

In one or more embodiments, the electrical machine 200 further comprises the slide rails 210 (an example of machine-side slide rail). At least one of the protective ribs 208 is disposed between the slide rail 210 and the power terminal 204.

In one or more embodiments, the battery pack 2 further comprises the slide rails 20 (an example of battery-side slide rail). At least one of the recessed grooves 76 is disposed between the slide rail 20 and the power terminal 60.

Spaces that receive the slide rails 20 of the battery pack 2 are often provided between each slide rail 210 of the electrical machine 200 and the power terminal 204 adjacent thereto, which allows for easy insertion of user's finger. According to the above-described configuration, the user is prevented from accidentally touching the power terminals 204 via the spaces between the slide rails 210 and the power terminals 204, even in the state where the battery pack 2 is detached from the electrical machine 200. According to the above-described configuration, the recessed grooves 76 of the case 12 of the battery pack 2 receive the protective ribs 208 of the electrical machine 200 upon attachment of the battery pack 2 to the electrical machine 200, which allows the battery pack 2 to be attached to the electrical machine 200 without interference between the protective ribs 208 and the case 12.

## Claims

1. A battery pack comprising:
a plurality of battery cells including a first battery cell and a second battery cell;
a first thermistor disposed closest to the first battery cell among the plurality of battery cells;
a second thermistor disposed closest to the second battery cell among the plurality of battery cells; and
a case accommodating the plurality of battery cells, the first thermistor, and the second thermistor,
wherein
the first battery cell is disposed at a position where another battery cell is interposed between the first battery cell and a wall surface of the case with respect to a direction orthogonal to a longitudinal direction of the first battery cell, and
the second battery cell is disposed at a position where no other battery cell is interposed between the second battery cell and the wall surface of the case with respect to a direction orthogonal to a longitudinal direction of the second battery cell.

2. The battery pack according to claim 1, wherein the case includes an air supply hole through which air is introduced and an air discharge hole through which air is discharged.

3. The battery pack according to claim 2, wherein the second thermistor is disposed at a position where a distance from the position to the air supply hole is smaller than a distance from the position to the air discharge hole.

4. The battery pack according to claim 2 or 3, wherein the first thermistor is disposed at a position where a distance from the position to the air discharge hole is smaller than a distance from the position to the air supply hole.

5. The battery pack according to any of claims 2 to 4, further comprising a substrate accommodated in the case and disposed between the air discharge hole and the plurality of battery cells, wherein
each of the first thermistor and the second thermistor is connected to the substrate,
the first thermistor includes a film type thermistor, and
the second thermistor includes a dip type thermistor.

6. A battery pack, comprising:
a plurality of battery cells including a first battery cell and a second battery cell;
a first thermistor disposed closest to the first battery cell among the plurality of battery cells;
a second thermistor disposed closest to the second battery cell among the plurality of battery cells; and
a case accommodating the plurality of battery cells, the first thermistor, and the second thermistor,
wherein
the plurality of battery cells includes:
an upper battery cell group disposed in an upper row;
a lower battery cell group disposed in a lower row; and
a middle battery cell group disposed between the upper battery cell group and the lower battery cell group,
the first battery cell is included in the middle battery cell group, and
the second battery cell is included in either the upper battery cell group or the lower battery cell group.

7. A battery pack, comprising:
a plurality of battery cells including a first battery cell and a second battery cell;
a first thermistor disposed closest to the first battery cell among the plurality of battery cells;
a second thermistor disposed closest to the second battery cell among the plurality of battery cells; and
a case accommodating the plurality of battery cells, the first thermistor and the second thermistor,
wherein
the plurality of battery cells includes:
an upper battery cell group disposed at a position facing an upper surface of the case;
a lower battery cell group disposed at a position facing a lower surface of the case; and
a middle battery cell group disposed between the upper battery cell group and the lower battery cell group,
the first battery cell is included in the middle battery cell group, and
the second battery cell is included in either the upper battery cell group or the lower battery cell group.
